# EUROPEAN PATENT SPECIFICATION

(11) **EP 1 363 291 B1**
(45) Date of publication and mention of the grant of the patent: **14.03.2012**
(21) Application number: 02715743.7
(22) Date of filing: 16.01.2002
(51) Int. Cl.: G11B 27/32, G11B 27/10, G11B 27/034, G11B 27/28, H04N 9/804

(54) **INFORMATION RECORDING APPARATUS AND METHOD**
INFORMATIONSAUFZEICHNUNGSVORRICHTUNG UND -VERFAHREN
APPAREIL ET PROCEDE D'ENREGISTREMENT D'INFORMATIONS

(30) Priority: 16.01.2001 JP 2001007900; 27.04.2001 JP 2001131407
(43) Date of publication of application: 19.11.2003
(60) Divisional application: 10192033.8
(73) Proprietor: Panasonic Corporation, Kadoma-shi Osaka 571-8501 (JP)
(72) Inventor: HAMASAKA, Hiroshi, Hirakata-shi, Osaka 573-0075 (JP); YAHATA, Hiroshi, Moriguchi-shi, Osaka 570-0046 (JP); YAGI, Tomotaka, Nishinomiya-shi, Hyogo 662-0872 (JP); NAKANISHI, Nobuo, Kadoma-shi, Osaka 571-0064 (JP)
(74) Representative: Eisenführ, Speiser & Partner
(86) International application number: PCT/JP2002/000219
(87) International publication number: WO 2002/056314

(56) References cited:
- JP-A- 9 312 827
- JP-A- 2000 152 183
- JP-A- 2000 261 741
- JP-A- 2000 322 875
- JP-A- 2000 324 444
- KR-A- 2000 028 530

## Description

### BACKGROUND OF THE INVENTION

### 1. Field of the Invention

The present invention relates generally to a readable/writable data recording medium, and relates more particularly to a data recording medium for recording multimedia data containing data in different formats, including video data, still image data, and audio data. The invention also relates to an apparatus and a method for recording information to this data recording medium or for reproducing the recorded information.

### 2. Description of Related Art

In addition to recording and storing computer data, read-only optical disc media such as DVD-ROM (Digital Versatile Disc-ROM) discs are today also used as a recording medium for movies and other video information, photographs and other still images, and audio data (referred to herein as multimedia or AV data). DVD-RAM discs, a randomly writable, phase-change type optical disc medium, with a multiple gigabyte capacity have also become available.

Widespread adoption of MPEG standards, particularly MPEG 2, a group of international coding standards for digital AV data, have made DVD-RAM media well-suited as a recording and playback medium for use in the AV field as well as for storing computer data. More specifically, DVD-RAM discs are widely expected to replace conventional magnetic tape as the medium of choice for AV recording and playback.

Subjects of particular interest for the future include how AV data can be recorded to provide new functions and performance greatly surpassing that of conventional AV equipment using new high capacity optical disc media.

The greatest benefit of using disc media is a significant improvement in random access performance compared with magnetic tape. While it is possible to randomly access magnetic tape, it takes on the order of several minutes to rewind the tape. This is a significant order of magnitude greater than the seek time (several 10 ms) of optical disc media. For most practical purposes, tape is therefore not suitable as a random-access recording medium. A further benefit of the random access performance of optical disc media is that distributed recording of AV data, which is impossible with conventional tape, is possible with optical discs.

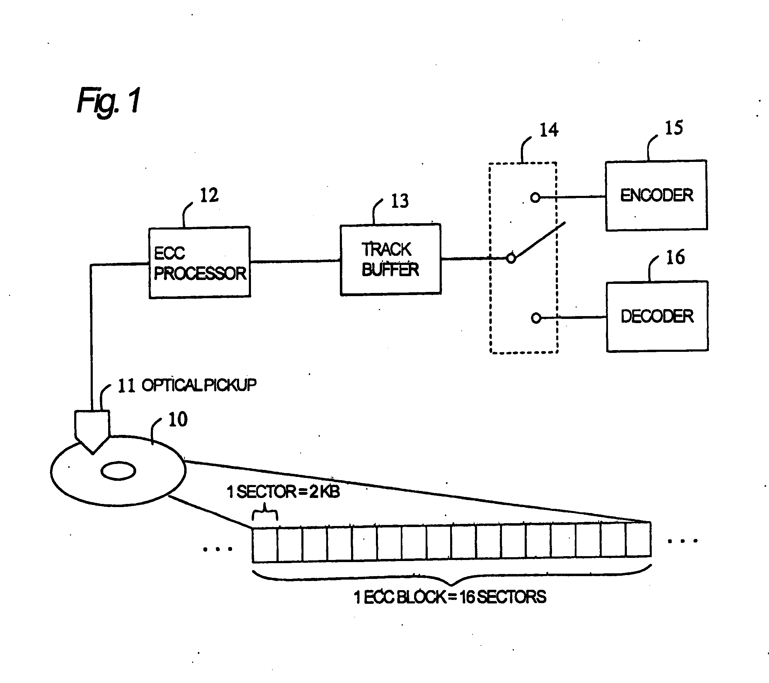

Fig. 1 is a block diagram of a DVD recorder (DVD drive device). As shown in Fig. 1 this drive device has an optical pickup 11 for reading data from a DVD-RAM disc 10, an ECC (error correcting code) processor 12, a one track buffer 13, a switch 14 for directing input to and output from the track buffer 13, an encoder 15, and a decoder 16.

As shown in Fig. 1 data is recorder to a DVD-RAM disc 10 in sector units (1 sector = 2 KB). In addition, 16 sectors form one ECC block for error correction processing by the ECC processor 12.

The track buffer 13 is used for recording AV data at a variable bitrate in order to record AV data more efficiently to the OVD-RAM disc 10. More specifically, while the DVD-RAM disc 100 read rate (Va) is a fixed bitrate, the AV data has a variable bitrate (Vb) determined primarily by the complexity of the data content (images in the case of video). The track buffer 13 is used to absorb the difference between Va and Vb. The track buffer 13 is also used even more effectively to continuously supply AV data to the decoder 16 when the AV data is located non-contiguously on the DVD-RAM disc 10. The track buffer 13 is also used to record AV data sent from the encoder 15 to the DVD-RAM disc 10.

The Universal Disc Format (UDF) file system is used with DVD-RAM discs in order to use high capacity DVD-RAM recording media more effectively and enable disc content to be accessed with a personal computer. The UDF file system is described in detail in the Universal Disc Format Standard.

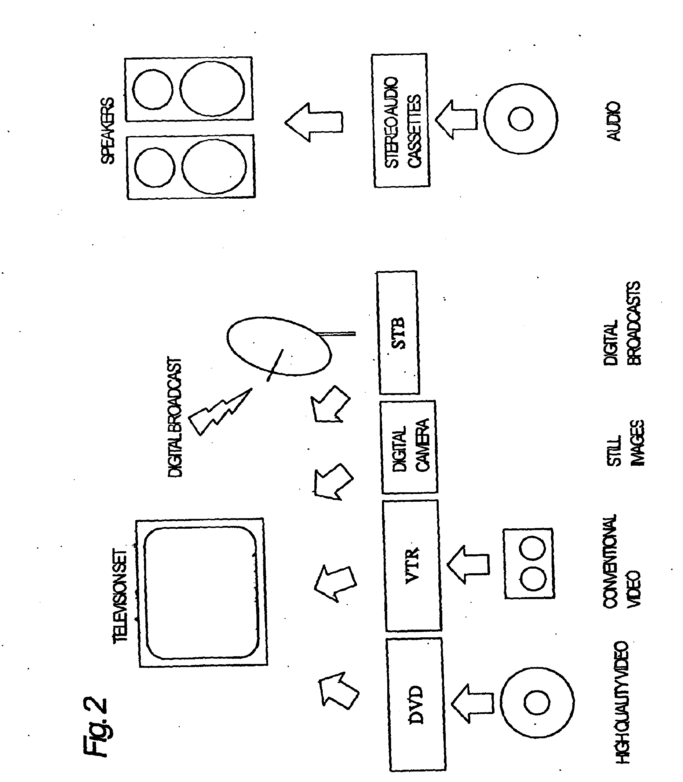

A conventional AV system is described next. Fig. 2 shows typical conventional AV equipment, media types, and data formats. For example, to view content on a video tape the user normally inserts a video cassette into a VCR and watches it on a television. To listen to music, the user might insert a CD into a CD player or a CD/radio/cassette player and use speakers or headphones to listen. In other words, conventional AV equipment has used different media for different content formats (video and audio). This has meant that the user must constantly change the media or AV equipment according to the desired type of content, and this is inconvenient

Advances in digital technologies have also led to rapid acceptance of DVD video discs for distributing packaged software and digital broadcast satellites for transmitting program content. Both of these were made possible by the revolution in digital technology and particularly by the adoption of the MPEG standard.

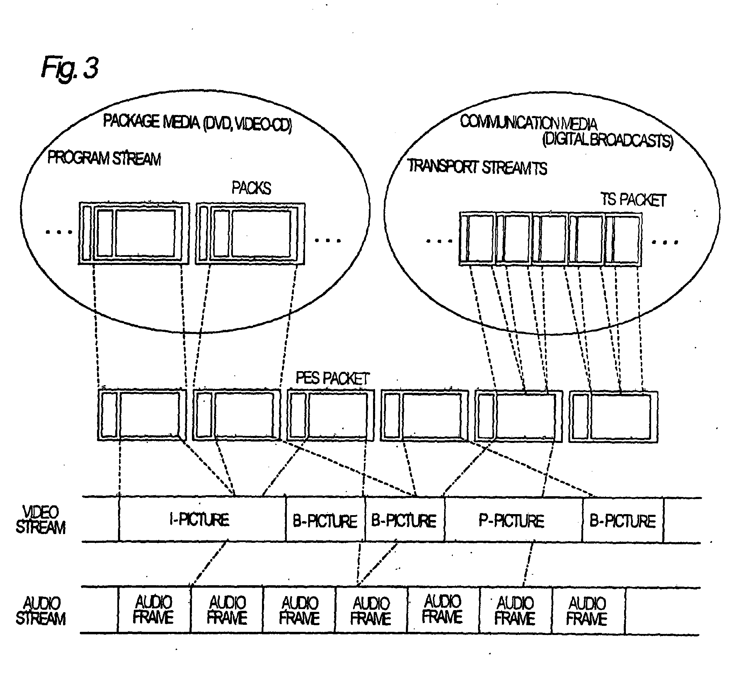

Fig. 3 shows the MPEG stream used for DVD video discs and digital broadcasting.

As shown in Fig. 3 the MPEG standard defines a hierarchical structure. What is important to note here is that the MPEG System layer stream that is ultimately used by the application is different for package media such as DVD video discs and communication media such as digital broadcasting.

The former is called the MPEG Program Stream, and transfers data in pack units generated according to the sector recording unit used with DVD video discs (2048 bytes). The latter is called the MPEG Transport Stream, and transfers data in Transport Stream (TS) packet units of 188 bytes for ATM transmission.

It was expected that the combination of digital technology and MPEG coding technologies for audio and video would enable AV data to be handled freely independently of any specific transmission medium, but small differences such as described above have combined to prevent the emergence to date of AV equipment and media compatible with both package media and communication media. The introduction of high capacity optical disc media such as DVD-RAM is expected to eliminate the inconvenience incumbent with conventional AV equipment as noted above.

In particular, optical discs capable of recording the MPEG Transport Stream in the same way as the MPEG Program Stream are expected to emerge with the start of digital satellite broadcasting.

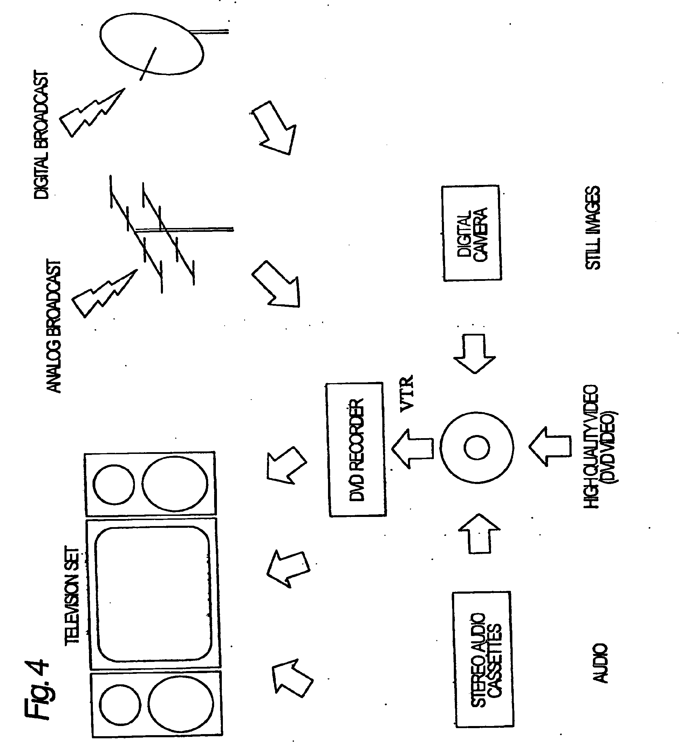

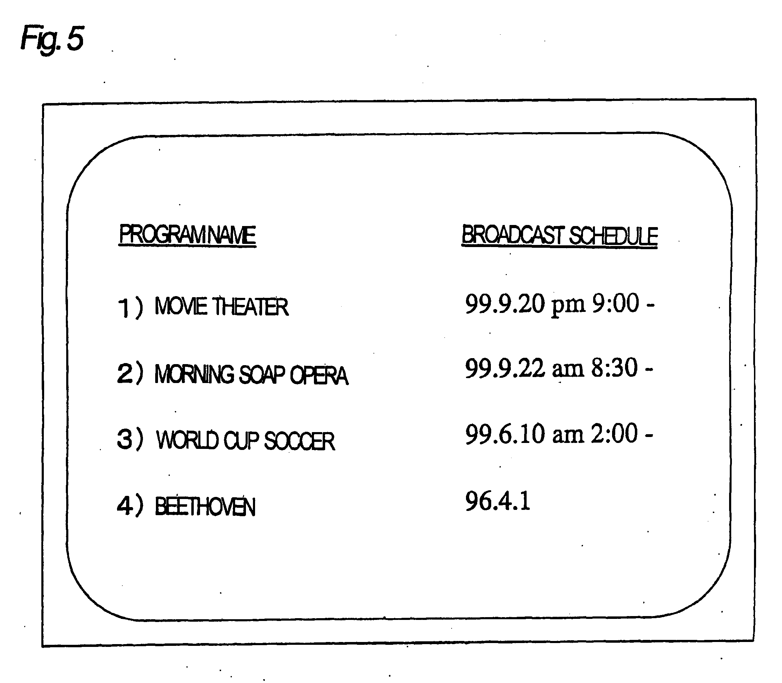

The ideal DVD recorder would be able to freely reproduce and present a variety of content formats from a single medium using a single AV device as shown in Fig. 4 without the user being aware of the format. More specifically, Fig. 5 shows an example of a menu displayed with this ideal DVD recorder. This menu is presented on a television screen and enables the user to select "1) Movie Theater" from a digital satellite broadcast, "2) Morning Soap Opera" or "3) World Cup Soccer" from a conventional terrestrial broadcasts, or "4) Beethoven" from a CD without the user being aware of the recording format or the medium from which the content is available or recorded.

The greatest problem achieving this ideal DVD recorder using a type of optical disc expected to be used as the next-generation AV recording medium is how to uniformly manage AV data and AV streams in different formats. No special management technique is needed to manage only formats that are already used. However, if the ideal DVD recorded described above is to be realized it is essential to use a method that is compatible not only with the numerous formats already in use but can also adaptively handle various new formats that will surely appear in the coming years.

The inconvenience caused by the prior art as described above, that is, the need for the user to operate the AV system with an awareness of the content and format, can occur as a result of differences in the user interface resulting from whether or not different AV streams can be handled uniformly. A problem for handling a variety of AV streams is therefore how data digitized on the transmission side (such as for digital broadcasting) is handled on the reception side. In particular, in order to use functions in new digital satellite broadcasting programs after the program content has been recorded to local media, that is, in order to enable time-shift recording, the content stream must be recorded in the same condition in which it was transmitted. The MPEG Transport Stream, for example, enables multiple video streams to be displayed at the same time (using the so-called multiview function).

In addition, the ability to time-shift record programs from new digital broadcasting services expected to begin in the future is also desirable even if part of the service content is still unknown.

The entry point is one example of utilizing the random accessibility that is the greatest feature of disc media with digitally recorded AV data. The need for the user to be able to set an entry point at a desired location so that this user-defined entry point can be accessed to start playback from that point is increasing. The recording device, however, also automatically sets other entry points. Confusion results from these different entry points being mixed, and a data structure enabling user-defined entry points to be identified from entry points set by the recorder is therefore needed.

US 6,480,669 B1 describes a digital video recording/playback system with entry point processing function which allows the user to insert an entry point (bookmark) at an arbitrary recording position of video data, audio data, and the like as if he or she placed a bookmark between pages of a book. Information RTR_VMG that manages recorded objects includes movie cell entry point information M_C_EPI. M_C_EPI includes entry point playback time information EP_PTM and text information PRM_TXTI that pertains to an entry point. PRM_TXTI can store text information that pertains to its contents together with type information and date information of an entry point.

US 2002/0150385 A1 describes a method and apparatus for automatically creating a play list of a received digital broadcast stream to be recorded on a recording medium. Specific positions of the received broadcast stream in which the packet identification code contained in the received stream changes are detected and recorded as entry points of programs. A play list can be automatically created based upon the detected entry points, thereby enabling a user to easily locating start positions of recorded programs.

### SUMMARY OF THE INVENTION

An object of the present invention is therefore to manage entry points in a manner that is easy for the user to understand.

A further object is to enable the stream used for digital broadcasting (for example, the MPEG Transport Stream) to be recorded together with various AV streams, and to enable reproducing the recorded data.

To achieve these objects a data recording apparatus according to the present invention comprises the features as defined in claim 1.

A data recording method according to the present invention comprises steps for performing the operations done by the data recording apparatus of this invention.

The invention can also be achieved as a data recording program executed by a computer to perform these same operations.

This data recording program can also be recorded to a data recording medium.

The control unit can generate management information containing a first table registering the first entry points, and a second table registering the second entry points.

The control unit could alternatively generate management information having a first identification flag added to the first entry points and a different identification flag added to the second entry points.

Thus comprised, management information whereby entry points set based on stream attributes and entry points set by the user can be separately detected can be obtained by the present invention. Furthermore, by selectively displaying the entry points based on the management information, the user can easily find a desired scene from the displayed information.

Other objects and attainments together with a fuller understanding of the invention will become apparent and appreciated by referring to the following description and claims taken in conjunction with the accompanying drawings.

### BRIEF DESCRIPTION OF THE DRAWINGS

Fig. 1 is a block diagram of the drive device in a DVD recorder;
Fig. 2 shows the relationship between conventional AV equipment and media;
Fig. 3 shows an MPEG Program Stream and MPEG Transport Stream;
Fig. 4 shows the relationship between AV equipment and media that is potentially possible with a DVD recorder;
Fig. 5 shows an example of a menu presented with a DVD recorder,
Fig. 6A shows the relationship between an AV file and directory;
Fig. 6B is a conceptual diagram of disc address space;
Fig. 7 describes the relationship between objects, object information, and PGC information;
Fig. 8 shows the stream management information derived from the object information;
Fig. 9 shows the relationship between a digital broadcast object (D_VOB), digital broadcast object information (D_VOBI), and PGC information;
Fig. 10A to Fig. 10F describe a timing map according to the present invention;
Fig. 11A and Fig. 11B show the relationship between TS packets and header information in a stream object (SOB);
Fig. 12 describes management information on a DVD-RAM disc;
Fig. 13 describes implementing a multiview function;
Fig. 14 describes entry points according to the present invention;
Fig. 15 describes the table of automatically set entry points and the table of user-defined entry points;
Fig. 16 shows entry point tables provided for each of multiple views;
Fig. 17 is a block diagram of a model player according to the present invention;
Fig. 18 is a block diagram of a DVD recorder;
Fig. 19 is a flow chart showing the recording operation of the recorder; .
Fig. 20 describes an EIT for PG_Change detection;
Fig. 21 describes PSI/SI information for PSI/SI detection;
Fig. 22 describes an MPEG-2 stream for SQH_Change detection;
Fig. 23 describes DII for Data_Top detection;
Fig. 24 describes DII for Data_Change detection;
Fig. 25 describes PMT for PMT_Change detection;
Fig. 26 describes DII for DE_Change detection;
Fig. 27 describes DII for Module_Change detection;
Fig. 28 describes EIT for Aud_Change detection;
Fig. 29 describes EIT for Multi_View detection;
Fig. 30 describes PMT, EIT for parental control information detection;
Fig. 31 is a flow chart showing the playback operation of the recorder;
Fig. 32 is a flow chart showing the process for setting user-defined entry points; and
Fig. 33 is a flow chart showing the reproduction process for user-defined entry points.

### DESCRIPTION OF THE PREFERRED EMBODIMENTS

A data recording medium, recording apparatus, and playback apparatus according to the present invention are described in detail below using by way of example a DVD-RAM disc, DVD recorder, and DVD player.

A DVD-RAM disc according to the present invention can records AV data in various formats to a single disc and can uniformly manage the recorded data. It is therefore possible to record on a single disc both video data recorded by encoding a conventional analog broadcast to an MPEG Transport Stream, and the MPEG Transport Stream transmitted as a digital broadcast. This data recorded to a DVD-RAM disc can also be reproduced according to a specified procedure. A DVD-RAM disc according to the present invention therefore contains management information for managing an AV stream independently of the format of the AV data.

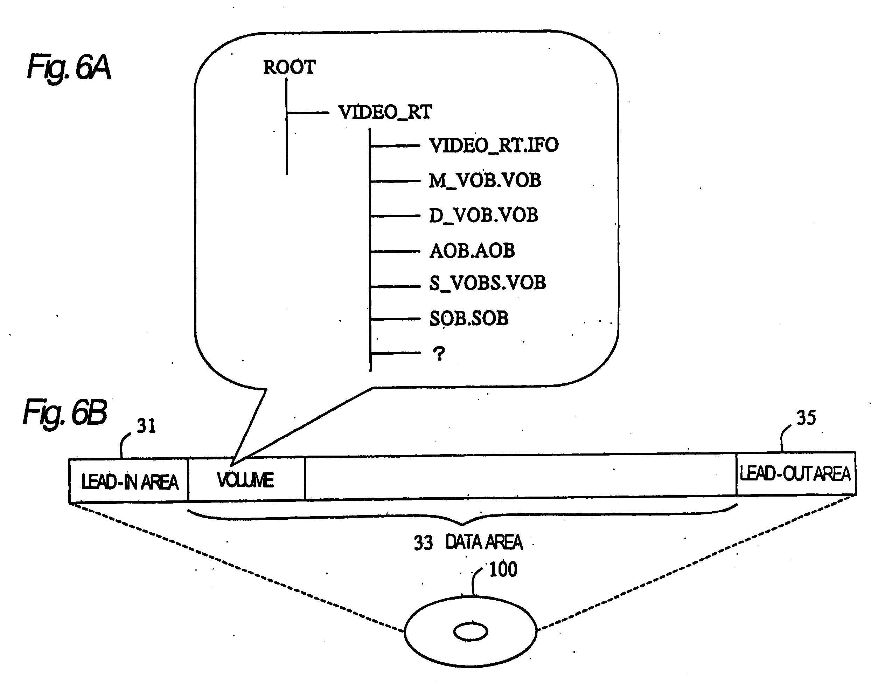

The data structure of data recorded to a DVD-RAM disc according to the present invention is described next with reference to Fig. 6A and Fig. 6B. The data structure of the DVD-RAM disc 100 recognizable through the file system of the disc 100 is shown in Fig. 6A. The structure of physical sectors on the disc 100 is shown in Fig. 6B.

As shown in the figure the physical sectors start with a lead-in area 31. A reference signal for stabilizing the servo and identification signals for identifying the specific media type are recorded in the lead-in area 31.

The data area 33 follows the lead-in area 31, and is used for storing logically valid data. Management information for file system use is recorded at the beginning of the data area 33. This management information is known as the "volume information." The file system is typically written in the UDF format, which is known from the literature. Further description thereof is therefore omitted. The physical disc structure then ends with a lead-out area 35. The same reference signal and other information recorded to the lead-in area 31 are recorded to the lead-out area 35.

The file system enables data on the disc 100 to be handled as a directory and files as shown in Fig. 6A. As shown in Fig. 6A all data handled by the DVD recorder is managed in the DVD_RTAV directory directly under the root directory.

A DVD recorder according to this embodiment of the invention can handle two types of files: AV files containing audio/video data (AV data), and management information files containing information for managing the AV files. In the example shown in Fig. 6A, the management information file is VIDEO_RT.IFO, and the AV files are the M_VOB.VOB file containing moving picture (video) data and the D_VOB.VOB file containing video data for digital broadcasting.

These files are described in detail below. Individual AV streams are defined as objects in the present invention. That is, an object contains a number of AV streams such as the MPEG Program Stream. By thus handling AV streams as abstracted objects, AV stream management information can be defined using a uniform object information model (ObjectI).

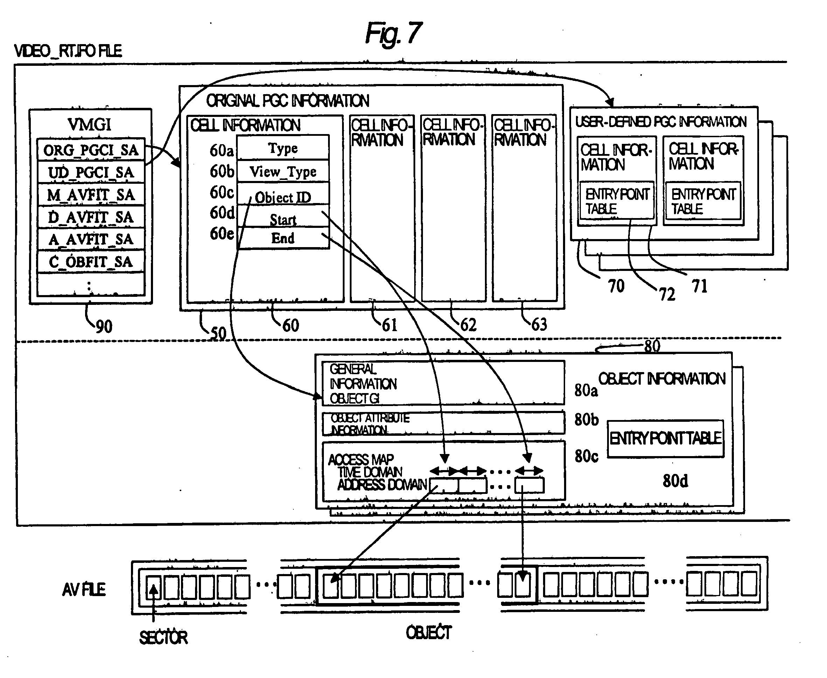

The management information is described first below with reference to Fig. 7. The AV file management information VIDEO_RT.IFO is used by way of example as the management information. Fig. 7 shows the relationship between AV file object, object information, and program chain (PGC) information. The management information VIDEO_RT.IFO contains object information ObjectI 80 for managing object recording locations, PGC information 50 and 70 defining the playback sequence and playback time of the data to be reproduced from the data recorded to the DVD-RAM disc, and Video Manager General Information VMGI 90. An AV stream has elements (such as time attributes) that can be shared while having individual differences according to the format. This enables abstraction as noted above. In addition, AV streams of the same format are stored in the recorded sequence in the same AV file.

The object information ObjectI 80 comprises general information Object GI 80a relating to the object, object attribute information AttributeI 80b, an access map 80c for converting the object presentation time to a disc address value, and an entry point table 80d relating to the PGC information 50 and defining the access points to desirable locations in the object (these access points are referred to below as entry points).

The access map 80c is used for converting between a time axis and data (bitstream) axis. The access map 80c contains data for each object unit correlating the time domain and the address domain. This is because each object is composed of multiple object units (VOBU) as further described below. An access map 80c is needed because an AV stream generally has two reference axes, a temporal axis and a data (bitstream) axis, and a perfect correlation does not exist between these two references. For example, variable bitrate coding whereby the bitrate is changed according to the complexity of the video content is increasingly common in MPEG-2 video, an international standard for video stream coding. This means that a proportional relationship does not exist between the presentation time and the amount of data from the beginning of the content stream, and the stream therefore cannot be randomly accessed referenced to the time base. An access map 80c is therefore needed to define the correlation between time and data.

The PGC information 50, 70 is used to control reproducing the video data and audio data, i.e., the objects, recorded to the DVD-RAM disc 100. The PGC information 50, 70 define single units of data for continuous playback by the DVD player. More specifically, the PGC information 50, 70 denotes the cell information 60, 61, 62, 63 identifying the object to be reproduced and what part of the object is to be presented (the playback period). This cell information is described further below.

The PGC information includes original PGC information 50 and user-defined PGC information 70. The original PGC information 50 is automatically generated by the DVD recorder during object recording so as to include all recorded objects. The user-defined PGC information 70 enables the user to define a desired playback sequence.

The entry point table 80d of the object information ObjectI 80 described above defines entry points relating only to the original PGC information 50 (therefore also referred to below as "original entry points"). Entry points related to the user-defined PGC information 74 (also called below "user-defined entry points") are defined, for example, in the entry point table 72 included in the cell information 71. The original entry points are set automatically by the DVD recorder in the objects defined in the object information ObjectI 80. The user entry points are set by the user at desired points in the object playback path.

It should be noted that the entry point table 80d could be written to the original PGC information 50. If located in the original PGC information 50, an entry point table 80d could be provided for each cell information entry, or one entry point table 80d could be provided in the original PGC information 50 as information not included in each cell information entry.

The user entry point table included in the user-defined PGC information 70 could likewise be written as a single table in the user-defined PGC information 70 as information not contained in each cell information entry rather than writing a user entry point table to each cell.

The structure and the function of the original PGC information 50 and the user-defined PGC information 70 are identical except that the user-defined PGC information 70 is defined by a user and contains at least one user entry point table 72. The original PGC information 50 is therefore described in detail below. Entry point tables 72 and 80d are described further below.

As shown in Fig. 7 the original PGC information 50 contains at least one cell information block 60, 61, 62, or 63. The cell information 60 specifies the object to be presented and the playback period in that object. The PGC information 50 normally records multiple cells in a particular order. The order of the cell information in the PGC information 50 denotes the playback sequence when objects specified by each cell are reproduced.

Each cell information entry such as cell information 60 contains type information (Type) 60a denoting the type of object specified by the cell information 60, object multiview information (View_Type) 60b as further described below, an object identifier (Object ID) 60c uniquely identifying the object, the starting position (Start) 60d in the object on the time base, and the ending position (End) 603 in the object on the time base. During data playback the cell information 60 is read sequentially from the PGC information 50 and the objects specified by each cell are reproduced for the playback period specified by the cell.

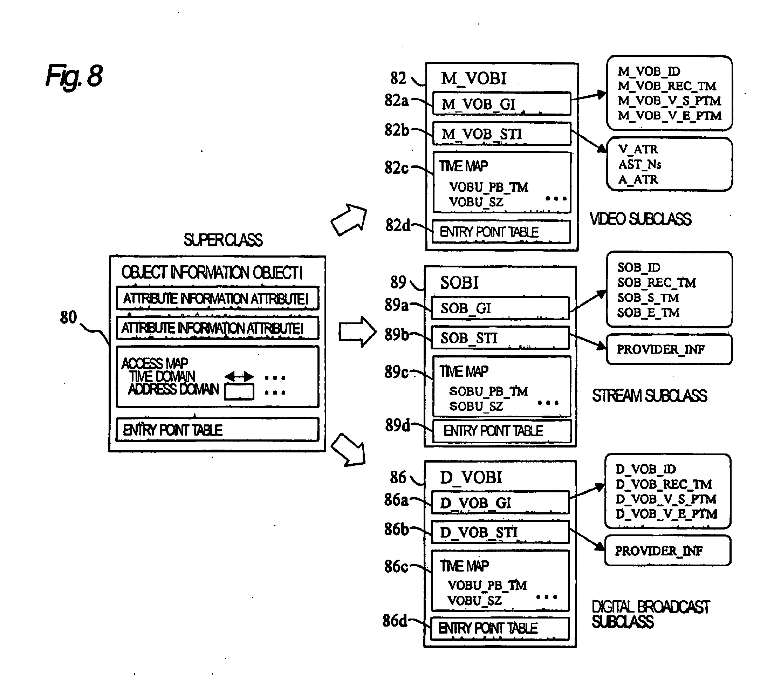

The abstracted object information must be defined more specifically in order to apply it to an actual AV stream. This is easier to understand with reference to class inheritance in an object-oriented programming model where the object information is a superclass and structures built specifically for each AV stream are subclasses. Fig. 8 shows stream management information derived from object information. As shown in the figure, this embodiment of the invention defines the following object information subclasses: a video subclass, digital video broadcasting subclass, and stream subclass.

The video subclass is the movie object information M_VOBI (Movie Video Object Information) 82 representing the video object information (MPEG Transport Stream).

The digital video broadcasting subclass is the digital video broadcast object information D_VOBI (Digital Video Object Information) 86 representing object information for digital broadcast data (MPEG Transport Stream).

The stream subclass is stream object information SOBI (Stream Object Information) 89 representing object information for streams with an unknown purpose.

This object information is further described below.

The movie object information M_VOBI 82 contains general information M_VOB_GI 82a about the MPEG Transport Stream, video object stream information M_VOB_STI 82b, a time map 82c, and entry point table 82d.

The general information M_VOB_GI 82a of the movie object information M_VOBI 82 contains video object identification information M_VOB_ID, the video object recording time M_VOB_REC_TM, video object start time information M_VOB_V_S_PTM. and video object end time information M_VOB_V_E_PTM.

Video object stream information M_VOB_ST 82b contains video stream information V_ATR such as the video stream coding mode, the number of audio streams AST_Ns, and audio stream information A_ATR such as the audio stream coding mode.

The time map 82c contains the first address of video objects in the AV file, the playback time VOBU_PB_TM of each video object unit VOBU, and the video object unit size VOBU_SZ. A video object unit VOBU is the smallest access unit in a video object (M_VOB), and is described in further detail below.

The digital video broadcasts object information D_VOBI 86 contains general information D_VOB_GI 86a about the MPEG Transport Stream of the digital broadcast object, stream information D_VOB_STI 86b, time map 86c, and an entry point table 86d.

The digital broadcast object general information D_VOB_GI 86a contains digital broadcast object identification information O_VOB_ID, the digital broadcast object recording time D_VOB_REC_TM, the start presentation time of the digital broadcast object D_VOB_V_S_PTM, and the end presentation time of the digital broadcast object D_VOB_V F_PTM.

The digital broadcast object stream information D_VOB_STI includes information (PROVIDER_INF) for storing additional information included in the digital broadcast.

The time map 86c includes the first address of a digital broadcast object D_VOB in the AV file, the playback time VOBU_PB_TM of each object unit, and the object size VOBU_SZ.

The stream object information SOBI 89 has general information SOB_GI 89a for the digital stream, stream information SOB_STI 89b for the digital stream, a time map 89c, and an entry point table 89d.

The general information SOB_GI 89a includes stream object identification information SOB_ID, stream object recording time SOD_REC_TM, stream object start time information SOB_S_TM, aid stream object end time information SOB_E_TM.

The SOB stream information SOB_STI 89b includes information PROVIDER_INF for storing additional information distributed as a stream.

The time map 89c includes the first stream object SOB address in the AV file, and playback time information SOBU_PB_TM for each stream object unit SOBU. The size of each stream object unit SOBU is the same size as the ECC block and is fixed. The stream object unit SOBU is the smallest access unit in a stream object SOB, and is described in further detail below.

By thus specifically defining the abstract object information, a corresponding stream information table is defined for each AV stream as shown in Fig. 8.

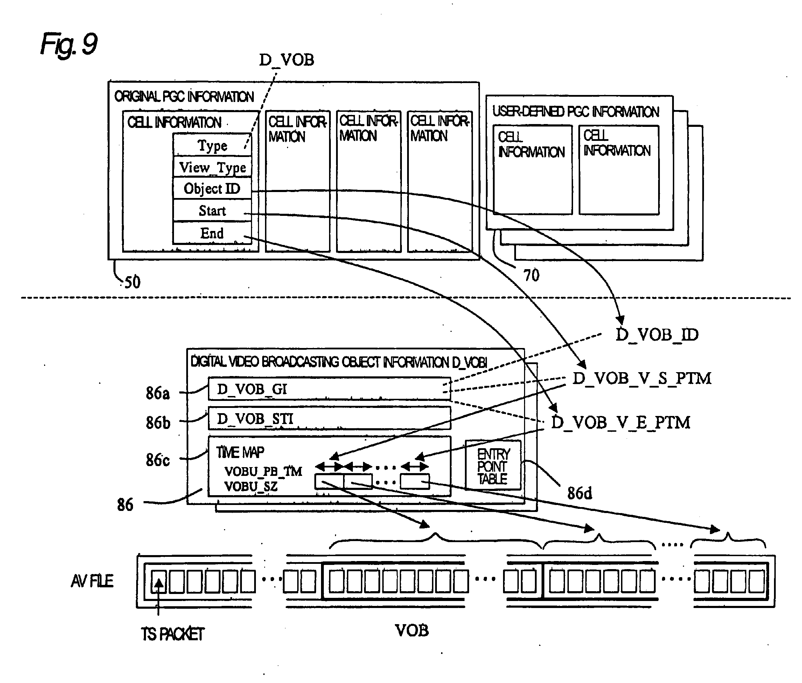

Referring next to Fig. 9, the correlation between the digital video broadcast object information D_VOBI 86 and cell information 60 is described as a specific example of object information ObjectI.

A type information Type value of D_VOB in the cell information 60 means that the cell corresponds to an object for digital broadcasting. A type information Type value of M_VOB means that the cell corresponds to a video object, and a value of SOB means the cell corresponds to a stream object.

If the type information Type specified in the cell information 60 is D_VOB, then the view type parameter View_Type is also set in the cell information. This View_Type parameter declares whether there are multiple views (further described below) in the cell, and if there are how many views are present. This View_Type parameter is set to the maximum number of views when there are multiple views, and is set to 0 when multiple views are not present.

The object ID (Object ID) can be used to search for corresponding object information (VOBI). This is possible using the 1:1 correlation between the Object ID specifying the digital broadcast object, and the digital broadcast object identification information D_VOB_ID contained in the general information D_VOB_GI 86a of the digital video broadcast object information D_VOBI 86. It is thus possible to search the object information for the cell information 60 by using the type information Type and Object ID.

The start address information Start in the cell information 60 corresponds to the start presentation time D_VOB_V_S_PTM. If the value of the Start parameter is the same (time), the cell indicates playback from the beginning of the digital broadcast object. If the value of the start address Start is greater than the start presentation time D_VOB_V_S_PTM, the cell is reproduced from some point between the beginning and end of the digital broadcast object. In this case cell playback starts delayed from the beginning of the digital broadcast object by an amount equal to the differences between the value of start presentation time D_VOB_V_S_PTM and the start address Start. The same relationship exists between the end-of-cell address information End and the end presentation time D_VOB_V_E_PTM of the digital broadcast object.

The playback start and playback end positions of the cell can thus be derived as relative times in a video object based on the start address information Start and end address information End in the cell information 60, and the start presentation time D_VOB_V_S_PTM and end presentation time D_VOB_V_E_PTM in the digital broadcast object general information D_VOB_GI 86a of the digital video broadcast object information D_VOBI 86.

The time map 86c in the digital video broadcast object information D_VOBI 86 is a table compiling the data size and playback time of each video object unit VOBU. The cell playback start and end times relative to the video object can be converted to address data by referencing this time map 86c.

It should be noted that a video object unit VOBU is a group of plural packs of a video object VOB representing an AV file as indicated by the bold lines in Fig. 9. Each pack is the same size as a sector, and image data is stored using one or more packs.

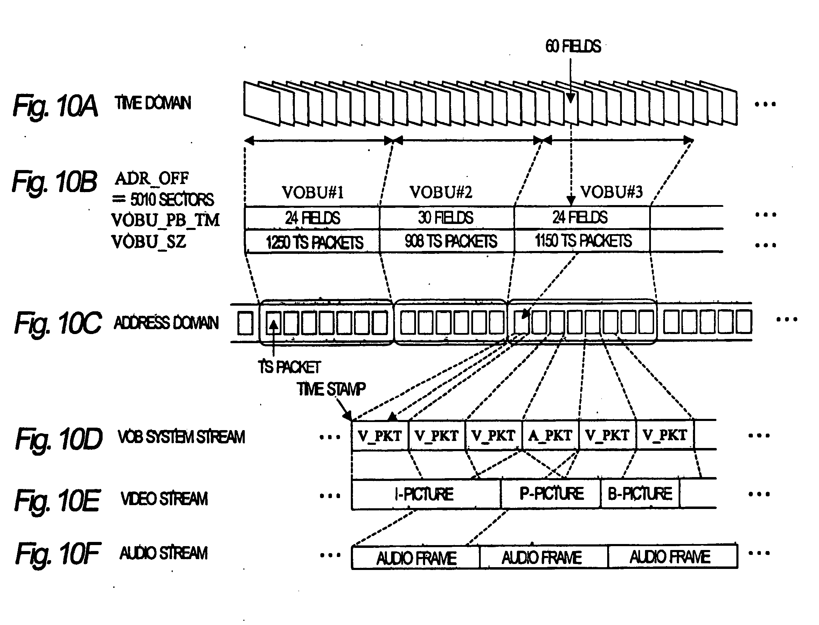

A specific example of address conversion using the time map is described next with reference to Fig. 10A to Fig. 10F.

Fig. 10A shows a digital broadcast object D_VOB representing video presentation on the time base. Fig. 10B shows a time map of size information and playback time for each video object unit VOBU. Fig. 10C shows the digital broadcast objects along the data (sector) axis. Fig. 10D shows the pack sequence for a part of a digital broadcast object D_VOB enlarged. Fig. 10E shows the video stream and Fig. 10F shows the audio stream.

A digital broadcast object O_VOB is an MPEG Transport Stream. An MPEG Transport Stream is a sequence of packs containing multiple PES packets obtained by sequentially packetizing the video stream and audio stream into PES packets.

A transport packet (TS packet) has a fixed size of 188 bytes. Because one sector of a DVD-RAM disc holds 2048 bytes, multiple transport packets (2048 bytes/188 bytes = 10 TS packets) are recorded to one sector together with header information.

The transport stream is a single stream in which video packets V_PKT and audio packets A_PKT converted to TS packets are multiplexed to a single stream as shown in Fig. 10C to Fig. 10F.

The MPEG System Stream, which refers to the MPEG Transport Stream and Program Stream combined, has a time stamp in the stream to enable synchronized playback of the multiplexed video and audio streams.

Transport Stream time stamps include the Presentation Time Stamp (PTS) indicating the playback time of the frame. The start presentation time D_VOB_V_S_PTM and end presentation time D_VOB_V_E_PTM of the digital broadcast object are acquired referenced to this PTS.

A video object unit VOBU is described next. A video object unit VOBU is the smallest access unit in a digital broadcast object D_VOB. The MPEG video stream achieves the most efficient image compression by applying both image compression using the spatial frequency characteristic inside a video frame and image compression using the motion characteristic between video frames, i.e., on the time base. This means that information on the time base, specifically information about video frames chronologically before or after the current video frame on the time base, is needed in order to decompress some video frames, and some video frames cannot be decompressed without referencing these temporally preceding and following frames. To solve this problem a common MPEG video stream inserts a video frame that is encoded without reference to a motion characteristic on the time base (these are known as I-pictures) at the rate of one per 0.5 second in order to improve random accessibility.

A video object unit VOBU is defined as the group of packs starting from the pack containing the first data in an I-picture and ending with the pack immediately before the pack containing the first data in the next I-picture. The time map contains the size of each video object unit VOBU (i.e., the number of TS packets) and the playback time (number of fields) of the video frame in the object unit (VOBU).

It should be noted that the first data in an I-picture is not necessarily the beginning of a TS packet. This means that the last data in one video object unit VOBU could be in the same TS packet as the TS packet containing the first data in the next video object unit VOBU. The size of a video object unit VOBU is therefore the number of TS packets to immediately before the next video object unit VOBU, i.e., the TS packet containing the first data in the next I-picture.

Assume, for example, that the difference between the value indicated by the cell Start parameter and the value indicated by the digital broadcast object start presentation time D_VOB_V_S_PTM is 1 second (60 fields). This enables the playback start time of each object unit from the beginning of the digital broadcast object D_VOB to be calculated by simply accumulating the playback time of each video object unit VOBU in the time map 86c from the beginning of the playback sequence. It is likewise possible by accumulating the data size (number of TS packets) in each object unit to obtain the address of each object unit from the beginning of the digital broadcast object O_VOB.

Because 24, 30, and 24 field video object units VOBU are in sequence from the beginning of the digital broadcast object D_VOB in this embodiment of the invention, the video frame one second (60 fields) from the beginning of the digital broadcast object D_VOB must be contained in the third object unit (VOBU#3) from the beginning. In addition, because the sizes of the video object units VOBU are, respectively, 1250, 908, and 1150 TS packets from the beginning of the digital broadcast object, the starting address of the third object unit (VOBU#3) must be the 2158th TS packet from the beginning of the object, that is, the 8th TS packet in sector 215. As a result, the start address of the data where playback is to begin can be obtained by adding sector 5010, which is the start address (ADR_OFF) of the digital broadcast object D_VOB in the AV file.

The preceding description assumed that playback starts at the 60th video frame from the beginning. As described above, decoding and playback from any desired video frame is not possible due to the encoding characteristics of MPEG video, and playback therefore starts from the beginning of a neighboring video object unit VOBU offset six fields so that playback starts from the beginning of an I-picture. By driving the decoder so that it decodes only these six fields and does not present them, however, it is possible to start playback from the video field specified by the cell. The playback end time of the digital broadcast object corresponding to the end position of the cell and the address in the AV file can be acquired as described above.

An ID identifying the broadcasting company and information specific to each broadcaster is contained in the PROVIDER_INF field of the digital broadcast object stream information D_VOB_STI.

The video object information M_VOBI is described next. The video object information M_VOBI is also a subclass derived from the objects information, and is therefore basically the same as the digital broadcast object information. The big difference is that a video object M_VOB is reproduced by recording a terrestrial broadcast signal. That is, while a digital broadcast object D_VOB is directly recorded and reproduced using data transmitted from a digital broadcast satellite, a video object differs in that it is an AV stream acquired by the recorder encoding the content. Address conversion referencing the time map is the same as for a digital broadcast object D_VOB.

Let us assume, for example, that one sector of a DVD-RAM disc is 2048 bytes and an video object M_VOB packet is a fixed size of 2048 bytes. This means that with a video object M_VOB 1 pack = 1 sector. Because the data read/write unit of a DVD-RAM disc is the sector, the video object units can be defined from sector to sector. Address conversion referencing the T map is basically the same as with a digital broadcast object D_VOB. The time map used for video object M_VOB address conversion can be defined using a pack count instead of the packet count used in a digital broadcast object D_VOB for the VOBU size.

The stream object information SOBI is described next. Because the stream object information SOBI is also a subclass derived from the object information, it is also basically the same as the digital broadcast object information. The big difference is that while the stream content of a digital broadcast object D_VOB can be analyzed by the recorder, stream object SORB content cannot be analyzed by the recorder. Digital broadcast objects D_VOB are encoded by the recorder as are video objects M_VOB. The stream data structure is therefore known and can be analyzed by the recorder. However, because stream objects SOB are recorded without the recorder analyzing the data, the recorder does not know the internal stream structure when, for example, the data is encrypted for copyright protection or the recorder does not have a decoder compatible with a new service.

The above-noted time map therefore cannot be generated when working with stream objects SOB. Therefore, this embodiment of the present invention generates a time map using the Arrival Time Stamp (ATS), which denotes the arrival time of each TS packet in the MPEG Transport Stream.

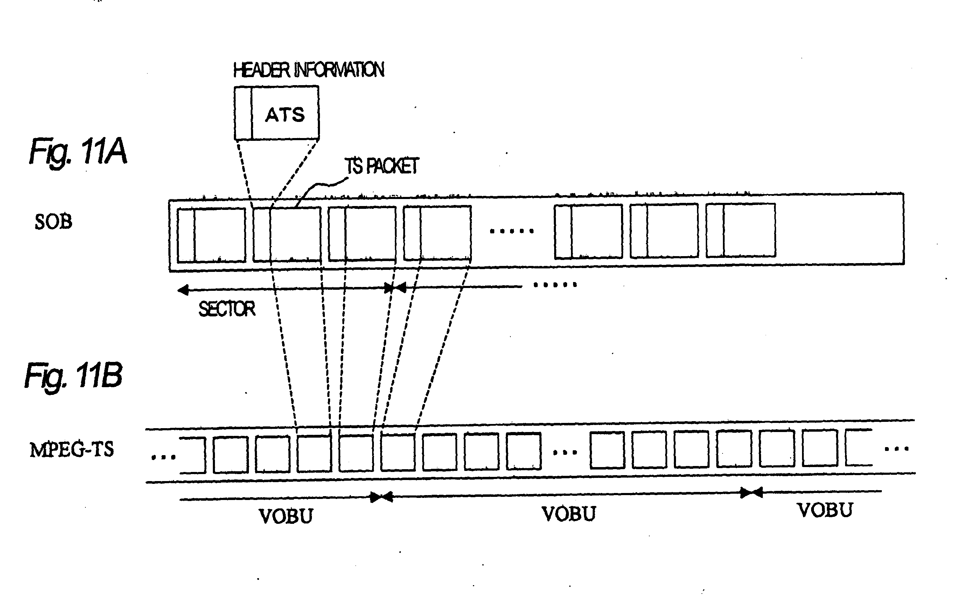

Fig. 11A and Fig. 11B show the relationship between the TS packet and header information in a stream object SOB. Multiple header information blocks containing the ATS and TS packets are disposed in a stream object SOB. Ten pairs of header information and TS packets are placed in one sector because the header information is 4 bytes and each TS packet is 188 bytes in this embodiment of the invention. The time in the stream object SOB is identified using the ATS.

Objects in the time map 89c (Fig. 8) of the stream object SOB are defined using a group of stream objects called a stream object unit SOB. Because the content of a stream object SOB cannot be analyzed, the size of a stream object unit SOBU is fixed. The size of one SOBU is therefore defined as the size of one ECC block in the present embodiment. Because the size of one stream object unit SOBU is thus fixed, it is not necessary to specify the SOBU size in the stream object SOB time map 89c. The time map is therefore a table of arrival time information (ATS) for the first TS packet in each stream object unit SOBU. In the case of a stream object SOB, the object presentation start time SOB_V_S_PTM and object presentation end time SOB_V_E_PTM of a stream object SOB are therefore the Arrival Time Stamp ATS of the first or last TS packet, respectively, of the object.

Address conversion referencing the time map is basically the same as with a digital broadcast object D_VOB. In the time map used for stream object SOB address conversion, however, the size of each video object unit VOBU is fixed, as with a digital broadcast object D_VOB. and is therefore not expressed as a packet count.

It should be noted that instead of adding an Arrival Time Stamp ATS, the time map could be generated using the Program Clock Reference PCR in the TS packets of the MPEG Transport Stream. The Program Clock Reference PCR indicates the input time of each TS packet to the decoder. In this case a Program Clock Reference PCR is not written to all transport packets, and some values must therefore be interpolated by the recorder.

As in a digital broadcast object, an ID identifying the broadcaster and information specific to the broadcaster are also inserted to the PROVIDER_INF field of the stream object stream information S_VOB_STI.

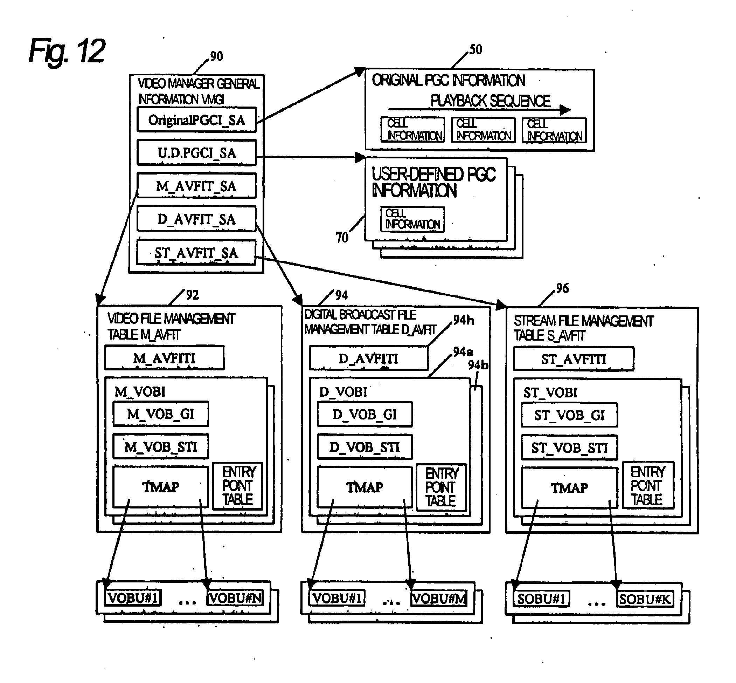

Fig. 12 shows the configuration of management information in an optical disc according to this embodiment of the invention. The data structure described above is shown in Fig. 12, and the management information is described below. An optical disc according to this embodiment of the invention contains, in addition to the PGC information 50, 70, Video Manager General Information VMGI 90, and various file information tables 92, 94, 96 used for file management.

The Video Manager General Information VMGI 90 is management information related to the entire disc and includes, for example, original PGC information 50, user-defined PGC information 70, and the starting address of the file management tables 92, 94, 96, i.e., pointer information. The PGC information 50, 70 and file management tables 92, 94, 96, for example, can be accessed by referencing this pointer information.

The file management tables 92, 94, 96 shown in Fig. 12 are described next below.

The file management tables 92, 94, 96 are used to manage data files composed of objects, and a different field information table is provided for each object type. In this embodiment of the invention these tables therefore include video file management table 92 for managing files recording digital broadcast objects, digital broadcast file management table 94 for managing video files recording video objects, and stream file management table 96 for managing stream files recording stream objects.

As described above, object information is defined based on object IDs in the cell information in the PGC information, but in this case the address of the object information is determined through the file management tables 92, 94, 96. The file management tables 92, 94, 96 therefore record the number of managed objects (object information entries), object ID, and the size of each object information entry.

If the object ID denotes the sequence number of the object information in the file management table, for example, it is possible to know the number of the object information entry in the file management table based on the object ID specified by the cell information, i.e., whether the object information is the first or the n-th entry. The address of the specified object information can then be acquired by calculating an offset from the sequence number of the object information and the file size referenced to the starting address of the file management table.

As shown in Fig. 12 the digital broadcast file management table 94 manages digital broadcast files recording digital broadcast objects. The digital broadcast file management table 94 contains digital broadcast object information D_VOBI 94a, 94b, and so forth, and table management information D_AVFITI 94h including the number of digital broadcast object information D_VOBI entries managed by the table 94 and digital broadcast object size information. Digital broadcast information is recorded continuously to the disc for the digital broadcast object information count recorded in the table management information D_AVFITI 94h.

As described above, the digital broadcast object information 94a, 94b includes general information D_VOB_GI, digital broadcast object stream information D_VOB_STI, a time map, and entry point table. The time map includes the presentation time and size (VOBU_ENT) of each digital broadcast object unit. It should be noted that the video file management table 92 (M_AVFIT) recording video objects, and the stream file management table 96 (S_AVFIT) recording stream objects, have the same data structure as the digital broadcast file management table 94 (D_AVFIT).

Cell information is recorded in the playback order to the original PGC informations 50. The cell information includes information defining the correlation to the object information (Type and Object ID), and the playback, period within the object (the Start and End points). The playback period information contained in the cell can be converted to an actual object address using the access map in the object information.

As noted above, other than whether an entry point table is included or not, the data structure of the user-defined PGC information 70 is the same as the data structure of the original PGC information 50.

By thus first abstracting management information for AV streams, the playback control information, i.e., PGC information, can be defined without depending upon information specific to the AV stream format, and AV streams can therefore be managed uniformly.

An environment in which the user can play back AV data freely without being aware of the AV format of the content can therefore be provided.

Furthermore, new AV formats using the above data structure can be incorporated by simply defining management information derived from the object information in the same way as described above for existing AV formats. This means that new formats can be easily incorporated in this data structure.

The entry point tables are described in detail next.

As described above, an entry point is an access point enabling a user to start playback from a desired point in a broadcast program recorded to the disc. As shown in Fig. 7, for example, entry points relating to the original PGC information 50 are recorded in the entry point table 80d in the object information ObjectI 80, while entry points relating to the user-defined PGC information 70 are recorded in the cell information of the user-defined PGC information 70, such as in the entry point table 72 in cell information 71.

Like the cell start and end positions, the entry points are specified using the PTS in the case of digital broadcast objects D_VOB and video objects M_VOB, and using the ATS in the case of stream objects SOB.

Setting an entry point is described next.

First, digital satellite broadcasts contain much additional information other than AV streams. The AV stream for one specific program is identified in digital satellite broadcasts from information stored in a special table called Program Specific Information (PSI). This Program Specific Information PSI and Service Information SI control Transport Stream playback. More specifically, the AV stream for a desired program is acquired by extracting the plural TS packet streams forming a desired program from the TS packets of the video and audio for the multiple programs contained in the Transport Stream. The multiple TS packet sequences forming the program are identified using the Packet ID PID assigned to each packet. The Packet IDs PID are recorded to the program map table PMT in the Program Specific Information PSI for the program. Digital satellite broadcasts contain data transmissions and interactive data enabling services that are not possible with conventional analog broadcasts.

One such service available with digital broadcasts is called "multiview," enabling multiple, temporally parallel (i.e., coincident) video streams to be included in a single program.

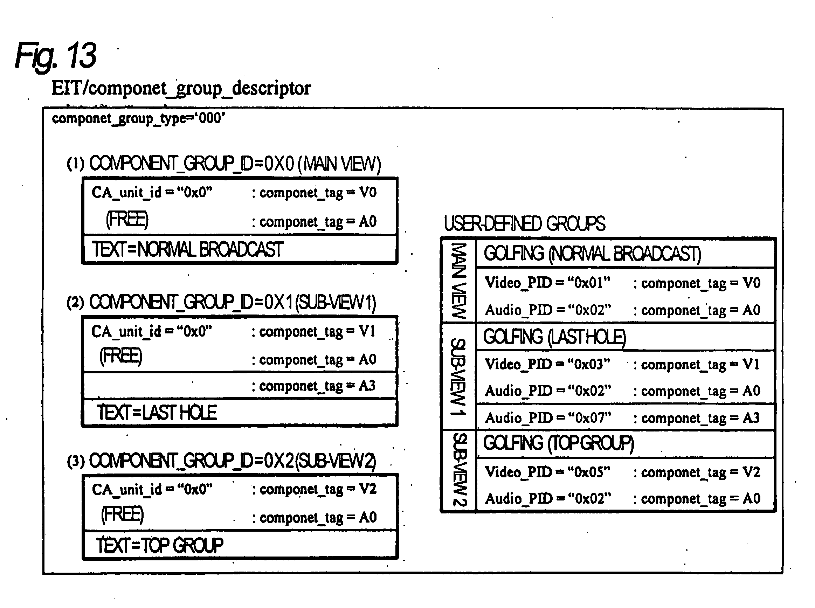

This multiview feature is described in detail in ARIB TR-B15 (Operational Guidelines for Digital Satellite Broadcasting Services Using Broadcasting Satellites), a technical report issued by the Association of Radio Industries and Businesses. The data structure for achieving this multiview feature is therefore only briefly described below with reference to Fig. 13. Fig. 13 shows the data structure of the Event Information Table (EIT) used to describe this multiview feature.

Table (1) component_group_id = "0x0" is referenced to play the main view. It is known from the component_group_id = "0x0" table that the component_tag of the corresponding video stream is V0. The table of user-defined units is referenced next, and because the Video_PID of component_tag V0 is 0x01, the video stream of the main view is known to be the TS packet sequence with a Packet ID PID of 0x01. Likewise, the audio stream of the main view is known to be the TS packet stream with a PID = 0x02.

A digital television can then decode these streams to present the main view of a multiview program to the user.

The AV stream of a digital broadcast also includes much additional information other than the audio and video content. This information includes, for example, information relating to data broadcasts enabling interactive manipulation of transmitted content by the user, and parental control information for blocking children's access to adult content. Information relating to data broadcasts is transmitted in a carousel fashion. This means that data of the same content accumulated for a specified period of time is repeatedly transmitted in file-size or smaller units. Using this carousel transmission method the required information can be acquired when needed even with broadcast media, i.e., one-way communications, because the same data is transmitted repeatedly.

If a data broadcast is viewed from the beginning of the carousel, the needed data can be efficiently acquired in a short time. Efficient time-shift viewing is also possible if blocked content (such as content blocked to children by the parental control feature) can be skipped during playback.

The user often accesses program content at these transition points. Therefore, by setting these transition points as entry points, the user can efficiently access programs recorded to the optical disc. These entry points can be detected automatically and can be set automatically by the recorder.

The user can also set user-defined entry points at favorite scenes, for example. Entry points set desirably by the user are different from entry points set automatically by the recorder. Displaying these different entry points simultaneously for selection by the user can therefore lead to confusion, and a data structure enabling user-defined entry points to be distinguished from automatically set entry points is needed.

This embodiment of the invention distinguishes automatically set entry points and user-defined entry points by setting a specific attribute in each entry point.

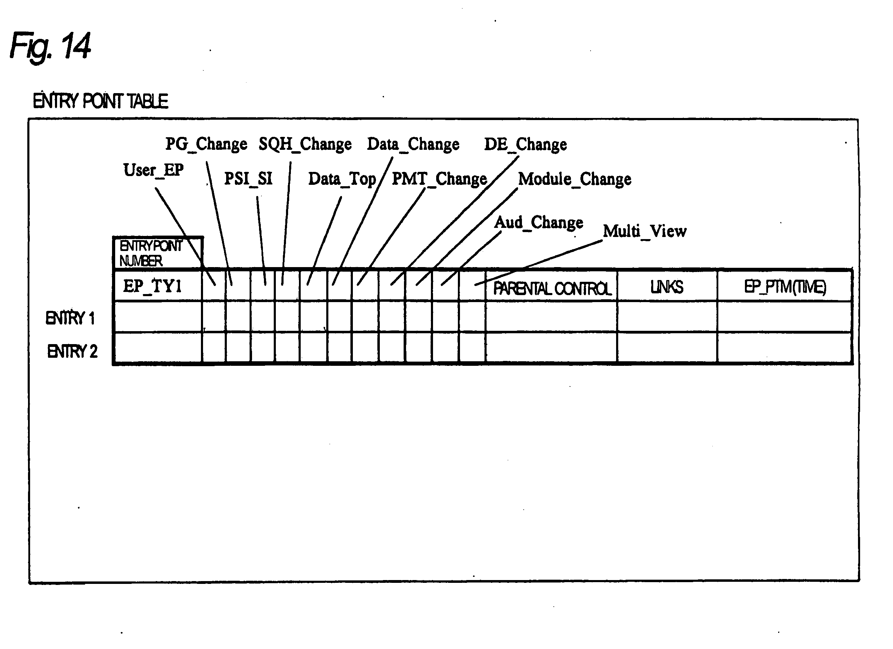

Fig. 14 shows an entry point table enabling this attribute to be set for each entry point. The entry point table has for each entry point a USHER_EP flag indicating whether the user intentionally set a specific entry point. This USER_EP flag is set to 1, for example, for user-defined entry points, and is set to 0 for original entry points (that is, entry points set automatically by the recorder). The recorder or player can therefore reference this flag to determine and clearly display for the user whether a particular entry point was set by the user.

Other flags and fields defined in the entry point table for each entry point include PG_Change denoting a program change, PSI_SI denoting a change in the PSI/SI information in the Transport Stream, SQH_Change denoting a change in an attribute of the MPEG stream in the Transport Stream, Data_Top denoting the starting point of a data carousel, Data_Change denoting a point where the content changes in the data carousel, PMT_Change denoting a change in the program map table PMT, DE_Change denoting a point where the data event is updated, Module_Change denoting a point where the module was updated, Aud_Change denoting a change in an audio attribute, a Multi_View field declaring the number of program views in a multiview-enabled program, and a parental control field for blocking access to certain content by minors, for example.

The entry point table also contains for each entry point link information containing links to files other than AV streams and this management information on the optical disc. This link information is the ATS. for stream objects. For digital broadcast objects D_VOB and video objects M_VOB, this link information is the PTS for individual entry points.

When the user sets an entry point, the recorder can display all entry points and their attributes (PG_Change, PSI_SI, SQH_Change, Data_Top, Data_Change, PMT_Change, DE_Change, Module_Change, Aud_Change, Multi_View field, and parental control information) in a user-readable manner regardless of whether the USER_EP flag is set. The user then marks the entry points needed for user editing from the list of all displayed entry points and attributes. If an entry point marked by the user is an original entry point set by the recorder, the recorder sets the USER_EP flag for the marked entry point is set to 1. If the user marks an entry point that was previously marked (set) by the user, the USER_EP flag remains set to 1.

The user may also want to set an entry point to a point that was not automatically detected by the recorder. In this case the user operates the recorder to select a desired scene and then sets an entry point. When this entry point is recorded in the entry point table by the recorder, the USER_EP flag is automatically set to 1.

When editing a program chain PGC the recorder displays for the user only those entry points for which the USER_EP flag is set. This enables the user to select only the needed entry points for program chain PGC editing without being confused by entry points found by the recorder that were automatically set by the recorder and are unimportant to the user.

Providing the entry point table 80d of the object information ObjectI 80 is sufficient if the entry point table is structured as shown in Fig. 14. As described above, however, the entry point table could be provided separately in the user-defined PGC information 70 (see Fig. 7), in which case it could be written or not written to the cell information.

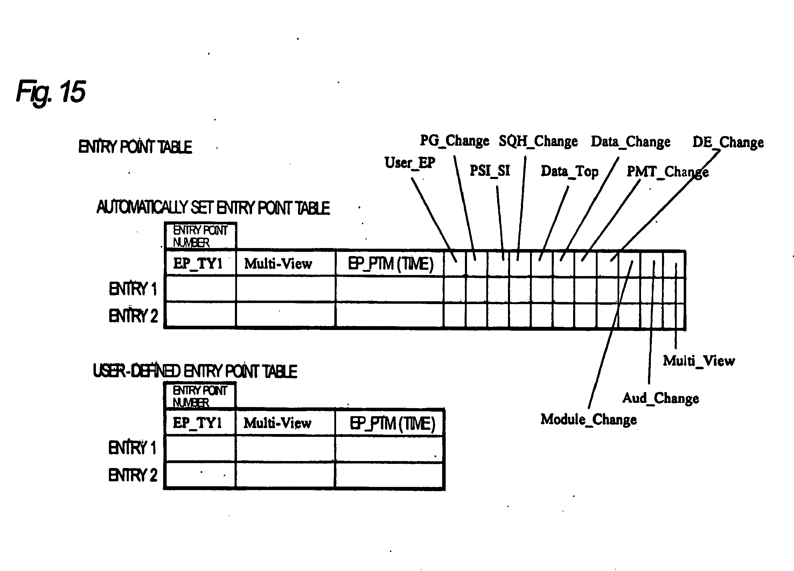

Automatically set entry points and user-defined entry points can thus be separately identified by managing therm using separate tables such as shown in Fig. 15. Fig. 15 shows a table of automatically set entry points and a table of user-defined entry points. Because entry points are set automatically only during recording by the recorder, the table of automatically set entry points is only written to the original PGC information. The entry point attributes described above are recorded in this table. The user-defined entry point table, however, is written to the cell information of the user-defined PGC information 70 (see Fig. 7). It should be noted that the table of automatically set entry points, could be written to the original PGC information 50 (Fig. 7) instead of to the object information ObjectI 80 (Fig. 7).

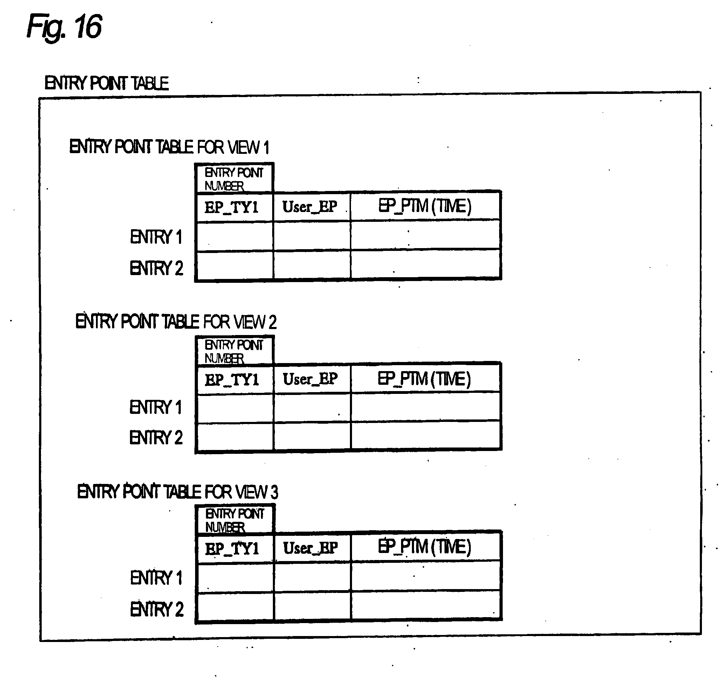

A separate entry point table could also be provided for each view in a multiview-enabled program. Fig. 16 shows entry point tables provided for individual views. This makes managing entry points for each view easy. It will also be obvious that fields for recording specific attributes could also be provided in these entry point tables for each view.

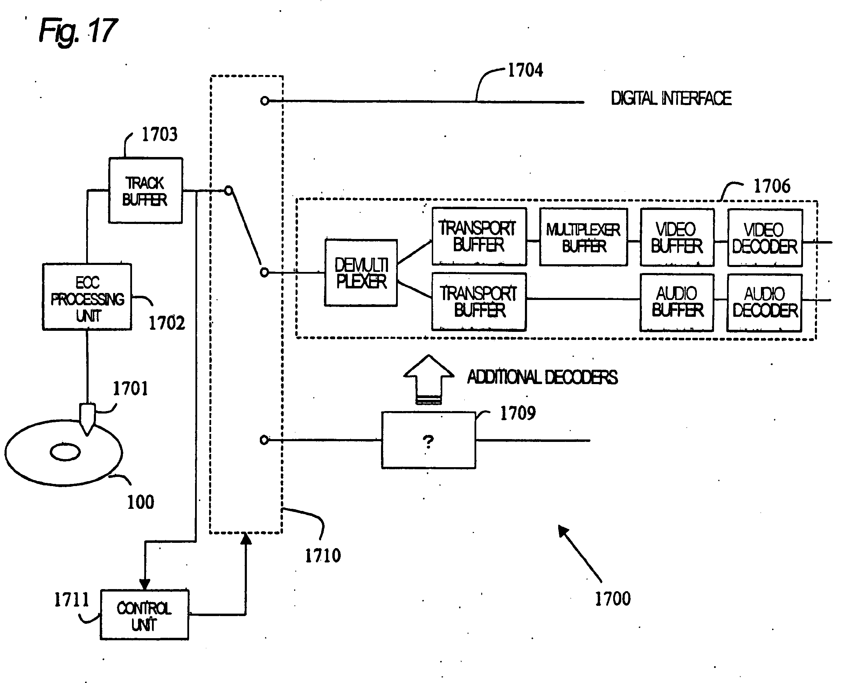

A model player for reproducing the optical disc described above is described next below with reference to Fig. 17. As shown in Fig. 17 this model player 1700 has an optical pickup 1701 for reading data from the optical disc 100, an ECC processing unit 1702 for error correcting the read data, a track buffer 1703 for temporarily storing the read data after error correcting, a TS decoder 1706 for reproducing Transport Streams including video objects M_VOB and digital broadcast objects D_VOB. and a control unit 1711 for controlling the various parts of the player 1700.

The player 1700 also has a digital interface 1704 for supplying an AV stream to an external channel. This makes it possible to supply AV streams to external devices through a communications protocol such as IEEE 1394 or IEC 958. When new AV formats are introduced, the digital interface 1704 enables output to external AV devices through the digital interface 1704 without passing through the internal decoder of the player 1700 for playback by that external AV device. To enable the player 1700 to support a new AV format, a decoder 1709 compatible with the new AV format can be connected to the track buffer 1703 in the same way as other decoders.

The playback operation of the player 1700 is described next.

The player 1700 uses the optical pickup 1701 to read data recorded to an optical disc 100. The ECC processing unit 1702 applies error correction to the read data to get the Transport Stream TS. The error-corrected Transport Stream is then stored to the track buffer 1703. If the Transport Stream TS can be decoded, the control unit 1711 drives the selection unit 1710 to connect the track buffer 1703 and TS decoder 1706. The TS decoder 1706 separates the Transport Stream TS into the encoded video data and audio data, and decodes the video and audio data. The decoded video data and audio data is then output. If the control unit 1711 determines that the Transport Stream TS cannot be decoded, a decoder 1709 compatible with the new AV format can be provided for decoding.

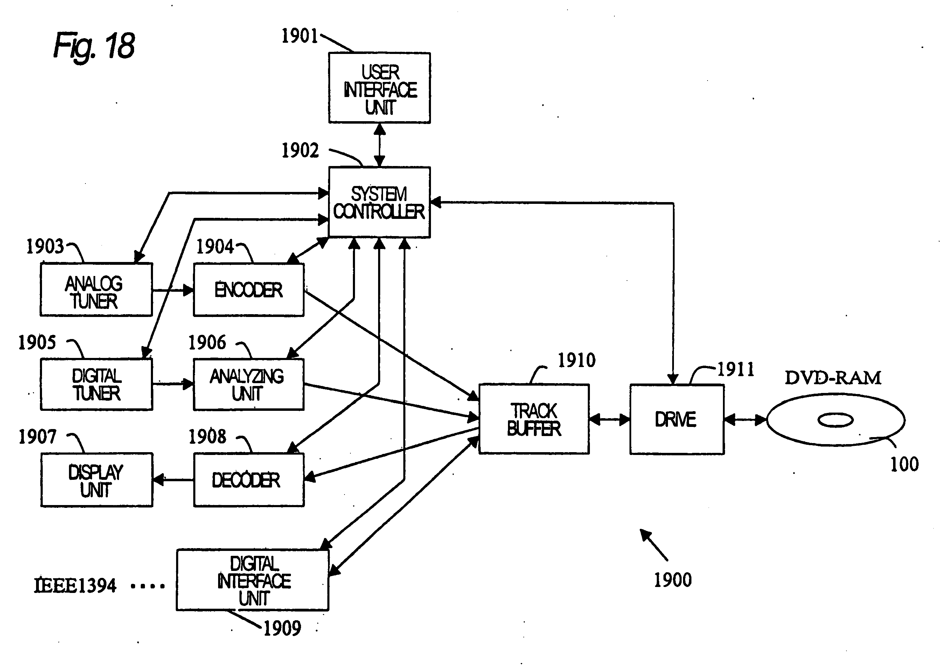

The configuration and operation of a DVD recorder for recording data to the above optical disc is described next below with reference to Fig. 18. It should be noted that this DVD recorder can also play back the data recorded to the optical disc. The playback operation is also described below.

As shown in the figure this DVD recorder 1900 has a user interface unit 1901 as an input/output device for displaying information for the user and receiving user input; a system controller 1902 providing overall management and control of the DVD recorder 1900; an analog tuner 1903 for receiving VHF and UHF broadcasts; an encoder 1904 for converting analog signals to digital signals and then encoding the digital signals to an MPEG Transport Stream; a digital tuner 1905 for receiving the data stream from digital satellite broadcasts; an analyzing unit 1906 for analyzing a stream (MPEG Transport Stream) including encoded digital data; a display unit 1907 such as a television and speakers; and a decoder 1908 for decoding AV streams.

The decoder 1908 has an additional decoder 1709 as well as the TS decoder 1706 shown in Fig. 17.

The DVD recorder 1900 also has a digital interface unit 1909, track buffer 1910 for temporarily storing data to be written to DVD-RAM, and a drive 1911 having a motor for turning the DVD-RAM disc 100, a laser unit for writing data to the DVD-RAM disc 100, and an optical pickup.

The digital interface unit 1909 is for outputting data to an external device via a communication protocol such as IEEE 1394.

The user interface unit 1901 of this DVD recorder 1900 first receives requests from the user. The user interface unit 1901 then passes the request to the system controller 1902, which interprets the user request and sends processing requests to other module.

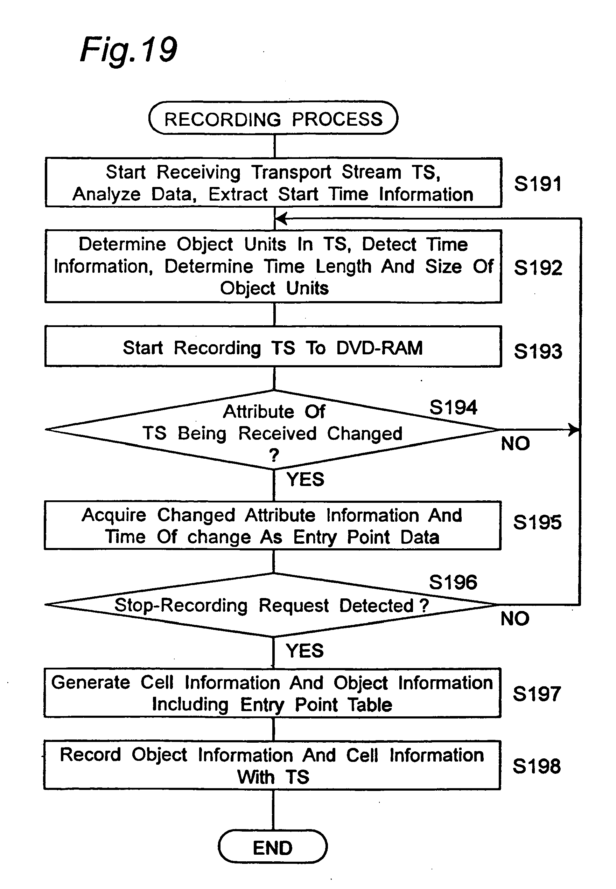

Operation when the user request is to record a digital broadcast is described next with reference to Fig. 19.

Fig. 19 is a flow chart showing the recording process of the DVD recorder 1900 shown in Fig. 18.

Digital broadcast recording requests from a user are passed from the user interface unit 1901 to the system controller 1902. The system controller 1902 then drives the digital tuner 1905 to receive the requested digital broadcast, and instructs the analyzing unit 1906 to analyze the received MPEG Transport Stream. The analyzing unit 1906 extracts and sends the start presentation time D_VOB_V_S_PTM to the system controller 1902 as the information required to reproduce the digital broadcast object information D_VOBI from the MPEG Transport Stream (step S191).

the analyzing unit 1906 further determines and separates the video object units VOBU in the MPEG Transport Stream, and sends the time length and size of the object units required for time map generation to the system controller 1902 (step S192). The video object units VOBU are determined by detecting I-pictures in the Transport Stream TS.

The MPEG Transport Stream sent from the digital tuner 1905 is transferred through the analyzing unit 1906 to the track buffer 1910. The system controller 1902 sends a record request to the drive 1911, and the drive 1911 reads and records data from the track buffer 1910 to the DVD-RAM disc 100 (step S193). The system controller 1902 also tells the drive 1911 where to record the data on the disc based on file system allocation data.

The analyzing unit 1906 monitors the MPEG Transport Stream being received while detecting object unit time information to detect any attribute changes (step S194). A specific method for detecting attribute changes in digital satellite broadcasts is described below. To do this the recorder detects change in the parameters labelled (a) to (k) below, and therefore has memory sufficient to store a specific amount of previously received data.

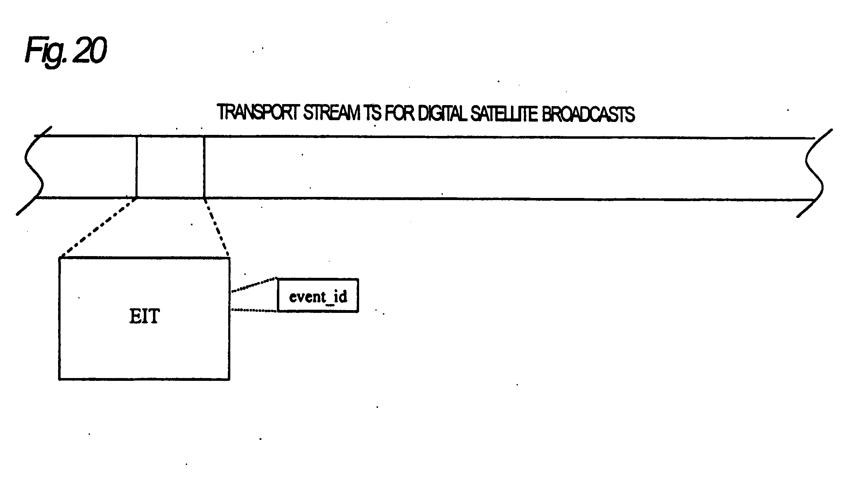

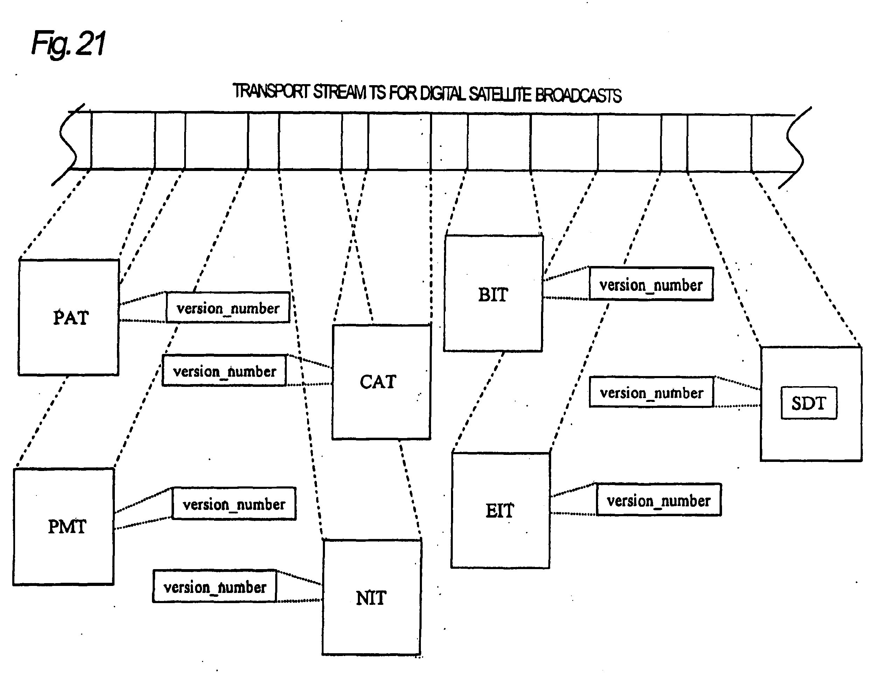

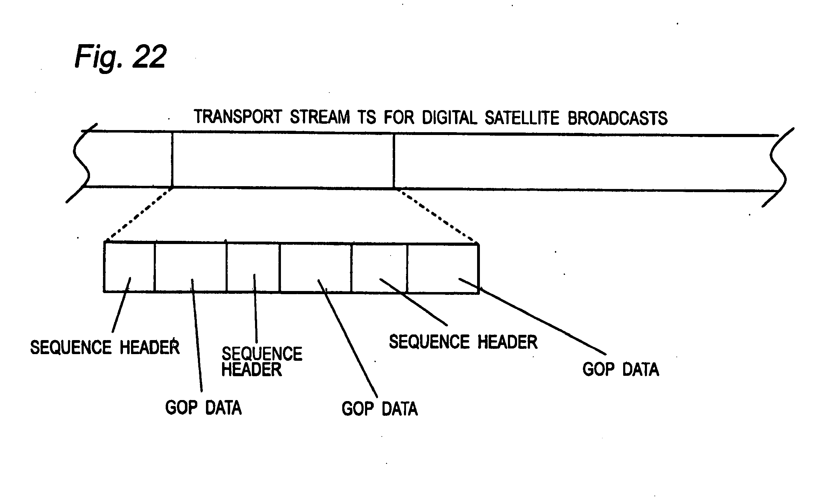

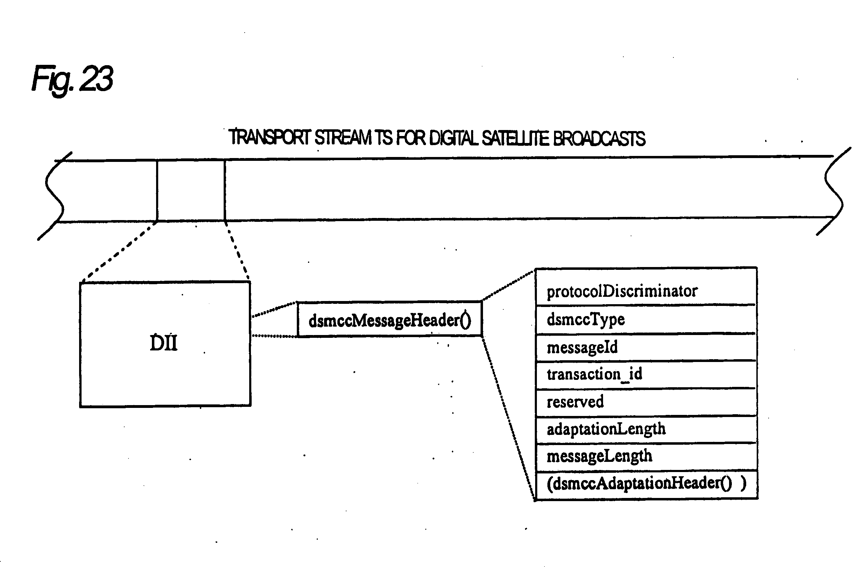

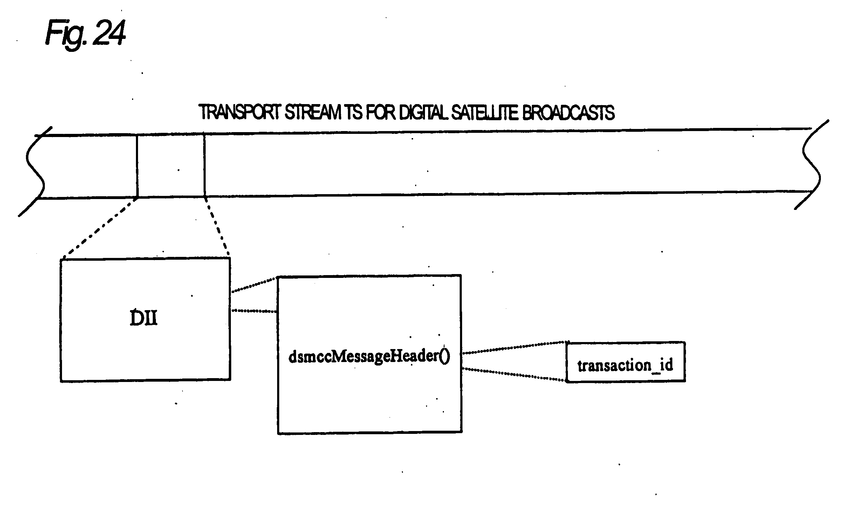

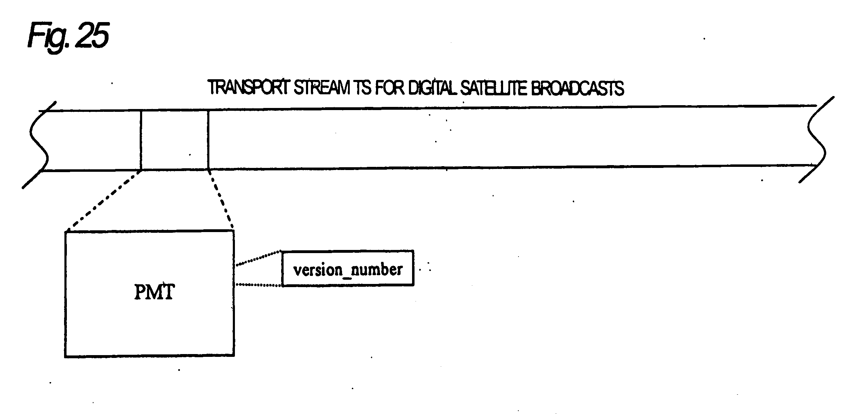

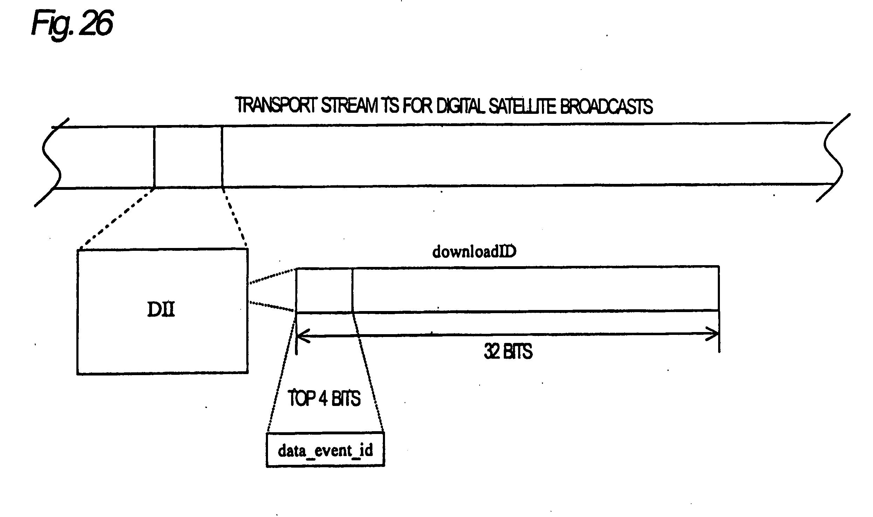

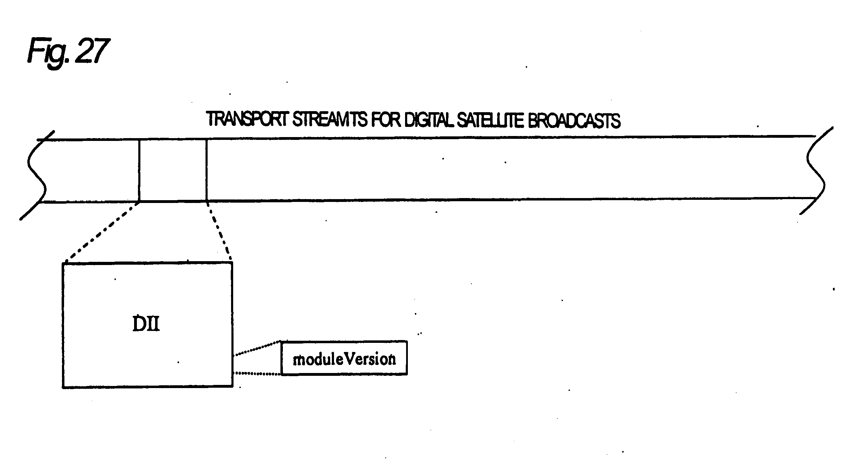

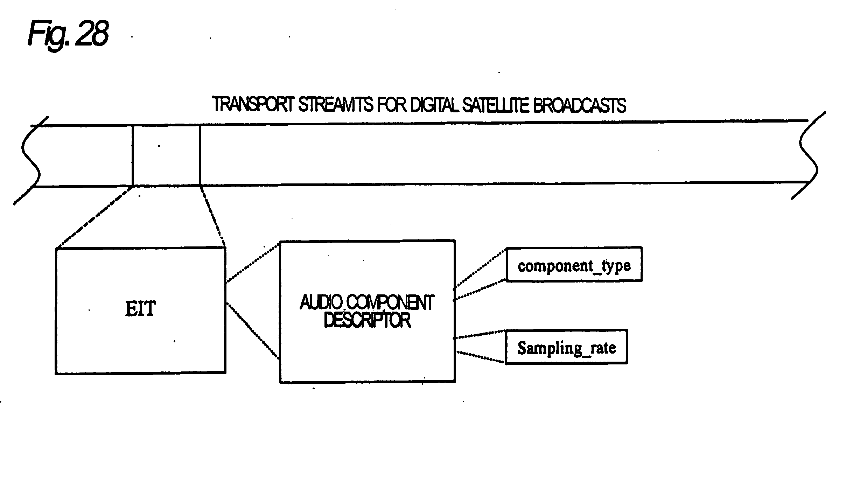

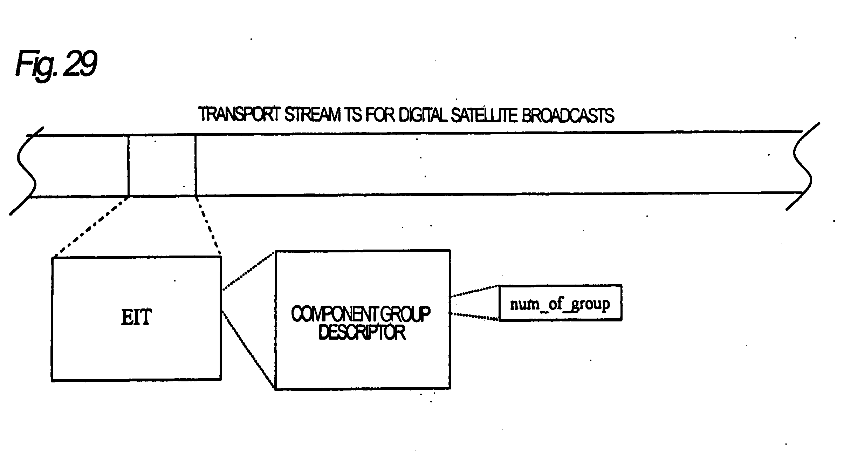

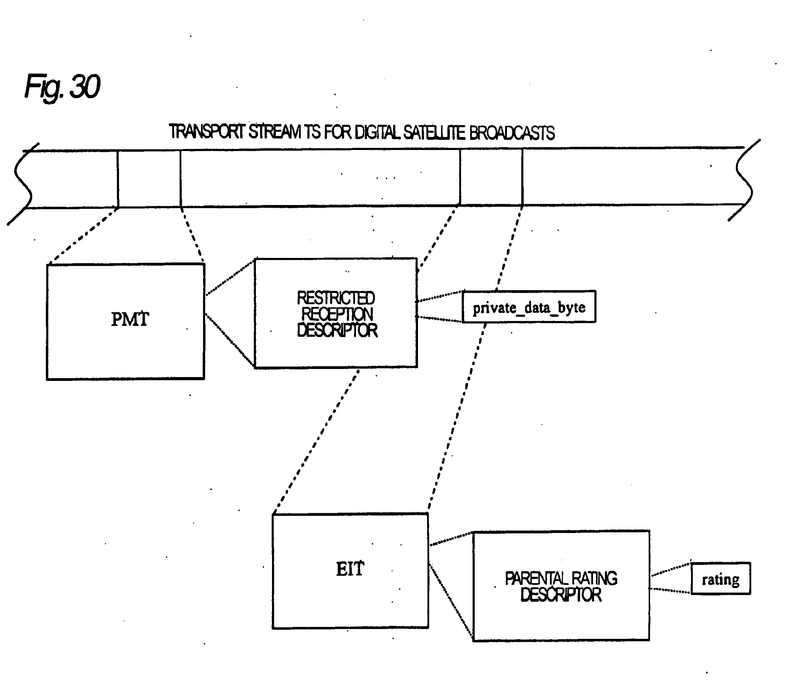

It should be noted that this detection method is just one example and while there are cases in which the data structure does not confirm in part to the ARIB-standard data structure, detection using a data structure compliant with the ARIB standard is also possible.
(a) PG_Change: Added when change is detected in the event_d parameter of the Event_Information_Table (EIT) in the digital broadcast stream (see Fig. 20).
(b) PSI/SI: Added when change is detected in the version number parameter in the PAT (Program_Association_Table), CAT (Conditional_Access_Table), NIT (Network_Information_Table), BIT (Broadcaster_Information_Table), SDT (Service_Description_Table), or EIT (Event_Information_Table) (see Fig. 21).
(c) SQH_Change: Added when change is detected in the sequence header in an MPEG-2 stream of a digital broadcast stream (see Fig. 22).
(d) Data_Top: Added when change is detected in the dsmccMessageHeader() parameter of the DII (DownloadInfoIndication) in the digital broadcast stream (see Fig. 23).
(e) Data_Change: Added when change is detected in the transaction_id in the dsmccMessageHeader() parameter of the DII in the digital broadcast stream (see Fig. 24).
(f) PMT_Change: Added when change is detected in the version_number parameter in the PMT (Program_Map_Table) in the digital broadcast stream (see Fig. 25).
(g) DE_Change: Added when change is detected in the data_event_id parameter in the downloadID of the DII message in the digital broadcast stream (see Fig. 26).
(h) Module_Change: Added when change is detected in the module_version parameter of the DII message in the digital broadcast stream (see Fig. 27).
(i) Aud_Change: Added when change is detected in the component_type or the sampling_rate parameter in the audio component descriptor of the EIT in the digital broadcast stream (see Fig. 28).
(j) Multi_View: Added when change is detected in the num_of_group parameter in the component group descriptor in the EIT of the digital broadcast stream (see Fig. 29).
(k) Parental control: Added by referencing the private_data_byte parameter in the restricted reception descriptor of the PMT in the digital broadcast stream, or the parental rating information of the rating field in the parental rating descriptor of the EIT (see Fig. 30).

Referring again to Fig. 19, when the analyzing unit 1906 detects a change in MPEG Transport Stream content it sends the detected information and the time when the change was detected as entry point data to the system controller 1902 (step S195). The system controller 1902 produces an entry point table collecting this entry point data.

Whether recording is to end or not is controller according to a stop-recording request from the user (step S196). Stop-recording requests from the user are passed through the user interface unit 1901 to the system controller 1902, and the system controller 1902 then sends a stop-recording instruction to the digital tuner 1905 and analyzing unit 1906. Processing repeats and recording continues from step S192 if there is no stop-recording request from the user.

When the analyzing unit 1906 receives a stop analyzing request from the system controller 1902, it stops the data analysis process and sends the last end presentation time D_VOB_V_E_PTM in the last-analyzed video object unit VOBU of the MPEG Transport Stream to the system controller 1902.

After ending the digital broadcast reception process, the system controller 1902 produces the digital broadcast object information D_VOBI based on information received from the analyzing unit 1906, and then generates cell information corresponding to this digital broadcast object information D_VOBI. The type information Type of the cell information is set to "D_VOB" at this time. The system controller 1902 also generates an entry point table from the entry point data received from the analyzing unit 1906 (step S197). The system controller 1902 also sets the view type parameter View_type of the recorded cell based on the entry point data.

Finally, the system controller 1902 instructs the drive 1911 to finish recording the data accumulated in the track buffer 1910, and to record the digital broadcast object information and cell information. The drive 1911 then records the remaining data in the track buffer 1910, the digital broadcast object information D_VOBI, and the cell information to the DVD-RAM disc 100, and ends the recording process (step S198).

The same basic process is performed when the user request is to record an analog broadcast. Operation differs in that the video object units VOBU are generated by the recorder because the Transport Stream TS is encoded by the encoder 1904.

The same basic process is also performed when the user request is for stream recording. Operation differs, however, in that the time information is set based on the ATS because the stream objects SOB are not analyzed.

Operation has been described above based on start-recording and stop-recording requests from the user. It should be noted that this DVD recorder 1900 can also be used for time-shift or programmed recording similarly to timer recording programs executed by conventional VCR decks. In this case the operation of the DVD recorder 1900 differs from that described above only in that the start and stop recording requests are asserted automatically by the system controller 1902 instead of by the user.

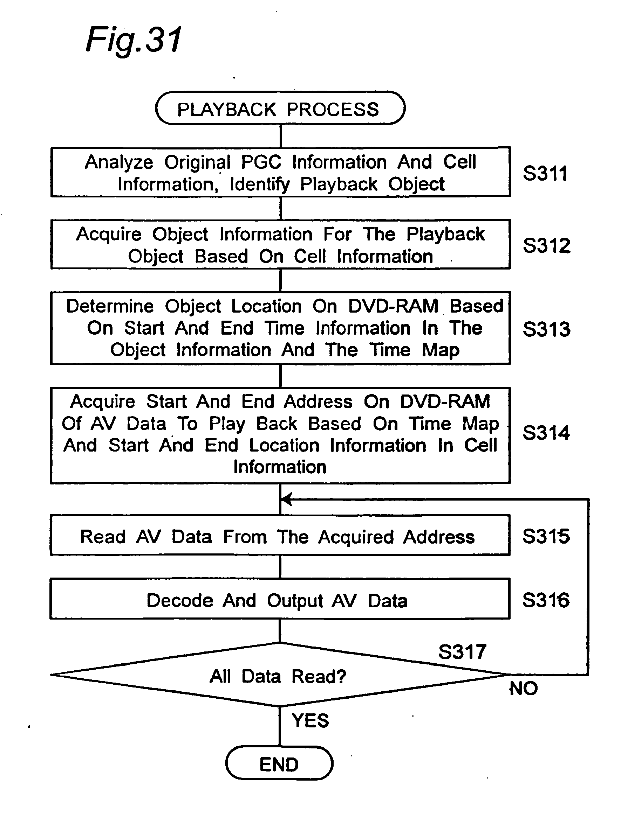

Operation of the DVD recorder 1900 when the user request is to play data recorded to this DVD-RAM disc 100 is described next with reference to Fig. 31. Fig. 31 is a flow chart of the playback process executed by the DVD recorder 1900 shown in Fig. 18. Playing an original program chain PGC composed of one digital broadcast object D_VOB and one cell information block is described below. It should be noted that the DVD player 1700 shown in Fig. 17 and described above can also execute the playback operation described below.

First, the user interface unit 1901 receives an original program chain PGC playback request from the user. The user interface unit 1901 passes the user request to the system controller 1902, which determines the user request to be an original PGC playback request and sends corresponding processing requests to the other modules.

The system controller 1902 analyzes the PGC information 50 and cell information 60 (Fig. 7) to identify the object to be reproduced (step S311). More specifically, the system controller 1902 first interprets the type information Type of the cell information in the PGC information. If the Type is "D_VOB" the system controller 1902 knows the AV stream to be reproduced is an AV stream recorded as an MPEG Transport Stream.

Next, the system controller 1902 searches the digital broadcast file management table D_AVFIT 94 to retrieve the corresponding digital broadcast object information D_VOBI based on the ID in the cell information (step S312). Then, based on the start presentation time D_VOB_V_S_PTM and end presentation time D_VOB_V_E_PTM of the video object information, and the time map, the system controller 1902 determines the location of the object on the DVD-RAM disc 100 (step S313). Once the location of the object is identified, the system controller 1902 gets the start and end addresses on the DVD-RAM disc 100 of the AV data to be reproduced based on the time map and the start and end address information in the cell information (step S314).

When the address to be accessed is acquired the system controller 1902 sends a request to read from the DVD-RAM disc 100 together with the read address to the drive 1911. The drive 1911 then reads the AV data from the address specified by the system controller 1902, and stores the read data to the track buffer 1910 (step S315).

The system controller 1902 then sends a decode request to the decoder 1908. The decoder 1908 thus reads and decodes the AV data stored in the track buffer 1910. The decoded AV data is then output through the display unit 1907 (step S316).

The drive 1911 then determines whether reading all data specified by the system controller 1902 is finished (step S317). If it is not, the process repeats from step S315 and reading the AV data continues. If it has finished, the drive 1911 tells the system controller 1902 that reading is completed, and the system controller 1902 then sends a Playback completion request to the decoder 1908.

The decoder 1908 continues playback until the track buffer 1910 is empty. When the track buffer 1910 is empty and decoding and playback of all data is completed, the decoder 1908 tells the system controlled 1902 that playback is completed and the playback process ends.

Playback of an original PGC composed of one digital broadcast object D_VOB and one cell information block is described above. It will be obvious, however, that an AV stream can be played back by performing the same process when the original program chain PGC contains one video object M_VOB, when it contains multiple video objects M_VOB, when it contains multiple digital broadcast objects, or when it contains a combination of video objects and digital broadcast objects. The AV stream can also be reproduced when the original program chain PGC contains a plurality of cells. This playback process also applies to user-defined program chains PGC.

Playback of stream objects SOB when the decoder 1908 does not have a playback function for all AV streams is described next. Referring again to Fig. 18, if the decoder 1908 does not have a playback function for reproducing the MPEG Transport Stream, for example, the stream cannot be reproduced through the decoder 1908 as described above. In this case the data is passed to an external device through the digital interface unit 1909, and the data is decoded and reproduced by the external device.

If the system controller 1902 detects that the cell information in the PGC information selected by the user for playback is a stream object SOB not support by the system, it instructs the digital interface unit 1909 to externally output the data instead of sending a playback request to the decoder 1908. The digital interface unit 1909 thus transmits the AV data stored in the track buffer 1910 according to the communication protocol of the connected digital interface. Except for these steps, the playback process is the same as the playback process used for digital broadcast objects D_VOB.

Whether the decoder 1908 is compatible with the AV stream selected for playback can be determined by the system controller 1902, or by the system controller 1902 querying the decoder 1908. The decoder 1908 in this case checks the Program Specific Information PSI or Service Information SI in the MPEG Transport Stream to determine if it is compatible with the stream.

It is important to note that there are times when the stream content cannot be interpreted for a stream object SOB, and playback capabilities are therefore partially limited. So-called special playback modes such as slow playback, for example, require repeated transmission of stream data that cannot be reproduced independently, that is, without reference to preceding and following picture data, and such playback modes are therefore difficult to achieve with a stream object SOB if the stream data content cannot be analyzed.

To resolve this problem, the DVD recorder 1900 according to this embodiment of the invention references the type information Type of the cell when a special playback mode request is received from the user, for example, and if a SOB is detected sends to the user interface unit 1901 a message reporting that the selected special playback mode cannot be used.

Furthermore, because stream object SOB playback can be limited as described above, it is also possible to prohibit mixing stream objects SOB and other objects, such as digital broadcast objects D_VOB and video objects M_VOB, in one program chain PGC when creating a program chain Fags defining the playback sequence of a continuous AV stream.

The process executed when there is a request to set a user-defined entry point in an optical disc recording AV data is described next.

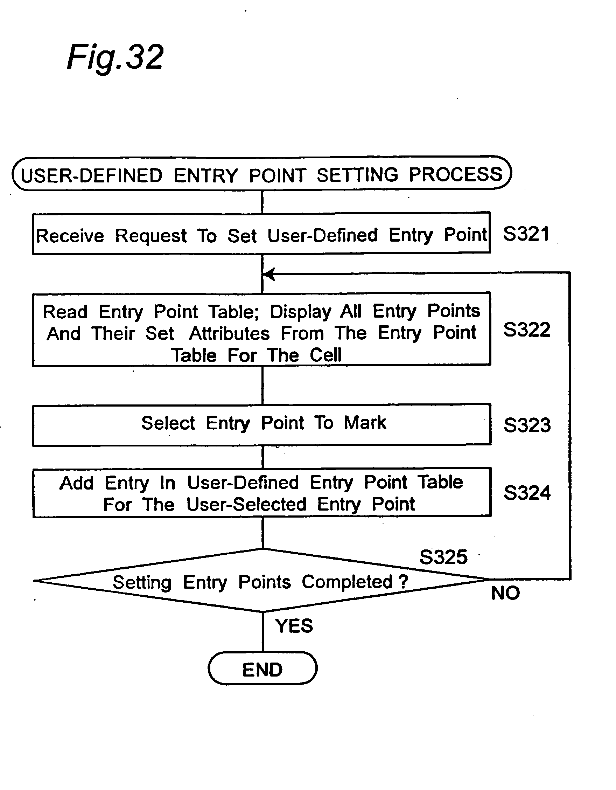

Fig. 32 is a flow chart of a process for setting user-defined entry points.

If a request to set a user-defined entry point is received through the user interface unit 1901 (Fig. 18) (step S321), the system controller 1902 (Fig. 18) reads the entry point table from disc and presents all entry points in the entry point table for the cell and the defined entry point attributes on the user interface unit 190 (step S322). The entry point tables referred to here are the automatically set entry point table and the user-defined entry point table shown in Fig. 15. More specifically, these entry point tables are the entry point table 72 of cell information 71 for the user-defined PGC information 70 (fig. 7), and the entry point table 80d of the object information ObjectI 80 (Fig. 7). It is also possible to reference only the user-defined entry point table. It is also possible to not present the attribute information if it is not particularly needed.

This attribute information includes the following flags and fields in the present embodiment: PG_Change denoting a program change, PSI_SI denoting a change in the PSI/SI information in the Transport Stream, SQH_Change denoting a change in an attribute of the MPEG stream in the Transport Stream, Data_Top denoting the starting point of a data carousel, Data_Change denoting a point where the content changes in the data carousel, PMT_Change denoting a change in the program map table PMT, DE_Change denoting a point where the data event is updated, Module_Change denoting a point where the module was updated, Aud_Change denoting a change in an audio attribute, a Multi_Vew field declaring the number of program views in a multiview-enabled program, and a parental control field.

Based on all of the displayed entry points and the attribute information, the user can easily find as needed a particular point for starting playback, a desired scene in a particular program, a desired digital broadcast program, or a desired scene in a program with multiple views.

The user then instructs the DVD recorder 1900 to set a marker denoting the selected entry point (step S323). When the system controller 1902 of the DVD recorder 1900 receives the set marker command for a particular entry point from the user, it adds an entry in the user-defined entry point table (step S324).

To set an entry point at a point other than the location of an original entry point, the user specifies the starting point and end point of the stream segment where the entry point is to be set. Based on the received starting point information, the system controller 1902 of the DVD recorder 1900 gets the time information PTS corresponding to that starting point. The system controller 1902 then adds an entry to the user-defined entry point table, and writes the acquired presentation time stamp PTS to the entry point time EP_PTM field.

If instead of providing two different entry point tables as shown in Fig. 15 a single table is used to manage both automatically set entry points and user-defined entry points, that is, an entry point table as shown in Fig. 14 is used, the USER_EP flag of the entry point table is set.

The process ends when all entry points have been set (step S324). If setting entry points is not completed, the procedure repeats from step S322, and all entry points set to that point and the corresponding attributes are displayed.

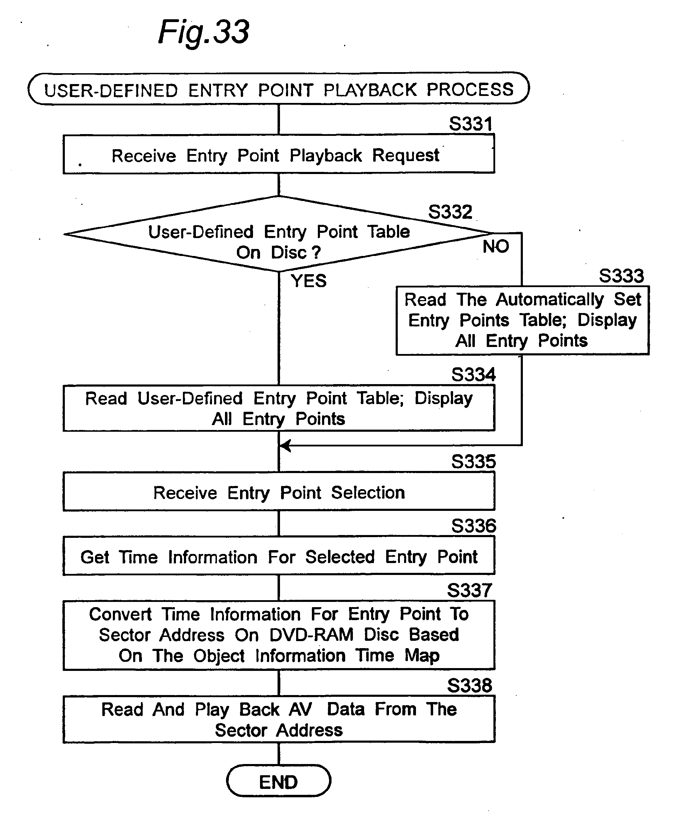

A playback process starting from a user-defined entry point is described next with reference to Fig. 33. Fig. 33 is a flow chart showing the user-defined entry point playback process.

When the system controller 1902 receives a user-defined entry point playback request (step S331), it determines if a user-defined entry point table (that is, entry point table 72 or the lower table shown in Fig. 15) is found on the optical disc (step S332). If a user-defined entry point table is present the system controller 1902 reads and stores the table to display memory, and displays the table (step S334). This enables the user to select the playback starting point from among only the required user-defined entry points without being confused by numerous entry points of which the user is unaware also being displayed.

If a user-defined entry point table is not on the disc, the system controller 1902 reads and stores the automatically set entry point table to display memory, and displays the automatically set entry points (step S334. If the entry point table in Fig. 14 is used, the USER_EP flag can be checked for each entry point to determine if the flag is set and only the entry points for which the USER_EP flag is set are read.

When the user then selects an entry point, the system controller 1902 receives information identifying the selected entry point from the user interface unit 1901 (step S335). The system controller 1902 then detects the entry point time EP_PTM for the selected entry point from the entry point table (step S336). The precision of this time information for each entry point in the entry point table is normally the precision defined in the MPEG standard, i.e., 27 MHz. It could also be the video frame count or a value obtained by dropping the lowest few bits of a 90 KHz or 27 MHz bitrate.

The system controller 1902 then converts this time information to a disc sector address using the time map of the object information for the object (D_VOB) (step S337). The system controller 1902 then starts playback of the MPEG Transport Stream from this sector address (step S338).

Video and audio can thus be played back from a particular scene, that is, entry point, chosen by the user. The system controller 1902 references the view type parameter View_type of the cell information. If View_type is any value other than 0, that is, it indicates a multiview stream, the view type View_type of the cell information is reported to the user interface unit 1901. Based on this View_type the DVD recorder 1900 displays the number of views available on the screen of the user interface unit 1901, such as in an on-screen display (OSD).

All entry points are displayed by the processes shown in Fig. 32 and Fig. 33 as described above. However, it is not necessary to always display all entry points. For example, only the entry points for which a change in a specific attribute is detected could be displayed, or only entry points found in a specified time period could be displayed. This selection can be made based on the attributes contained in the entry point tables or on the entry point time EP_PTM value.

Furthermore, when the DVD recorder reproduces an AV stream not supported by the decoder, the stream is reproduced through a digital interface in the above embodiments. However, even AV streams supported by the decoder could be passed through a digital interface and output to a set-top box or other external device as instructed by the user.

Furthermore, the present invention has been described as an optical disc, optical disc recorder, and optical disc player, but the same effect can be achieved by means of the same components and the same processes as described above even if the MPEG Transport Stream is recorded to a hard disk or other storage medium. The invention is therefore not limited to physical media. In this case the "same components" can be achieved by the central processing unit (CPU) of a personal computer and an image processing chip, for example: The CPU and other components in this case operate according to a recording program executable by a computer according to processes as shown in the flow charts in Fig. 19 and Fig. 31 to Fig. 33.

This computer-executable program could be stored to floppy disk, optical disc, semiconductor memory, or other recording medium. It could also be transferred over the Internet or other communication medium and installed to a personal computer.

This preferred embodiment of the invention has been described using by way of example an MPEG Transport Stream as the self-encoded stream. An MPEG Program Stream or a stream in some other format could alternatively be used, however.

### Application in industry

A transport stream received via a digital broadcast -can be recorded together with other AV streams, and entry points defined by a user in the recorded digital broadcast object can be discriminated from entry points set by the system with a data recording medium according to the present invention.

Furthermore, by defining in the entry point data written to the entry point table a flag denoting a program change, a flag denoting a change in the PSI/SI information, a flag denoting a change in an attribute of the MPEG stream, a flag denoting the starting point of a data carousel, a flag denoting a point where the content changes in the data carousel, a flag denoting a change in the content of the program map table PMT, a flag denoting a point where a module was updated, a flag denoting a point where the data event changed, a flag denoting a change in an audio attribute, a field declaring the number of program views in a multiview-enabled program, and a parental control field, this information can be displayed for the user to make it easier for the user to find a desired scene. If a cell contains multiple views, this and the number of views can also be displayed for the user.

Although the present invention has been described in connection with the preferred embodiments thereof with reference to the accompanying drawings, it is to be noted that various changes and modifications will be apparent to those skilled in the art. Such changes and modifications are to be understood as included within the scope of the present invention as defined by the appended claims, unless they depart therefrom.

## Claims

1. A recording apparatus comprising:
a receiver unit (1905) operable to receive a digital stream, which is a multiplex of a video stream and an audio stream;
an input unit (1901) operable to receive a first entry point (72) representing a starting point of playback of the digital stream, the first entry point being defined by a user;
an analyzer (1906) operable to automatically produce, during a monitoring of the digital stream, a second entry point (80d) representing a point at which an attribute of the digital stream changes;
a control unit (1902) operable to generate management information; and
a drive unit (1911) operable to record the generated management information and the digital stream onto a recording medium,
wherein the management information (90) includes:
playback path information (50, 70) representing a playback path of the digital stream, the playback path information containing original playback path information (50) and user defined playback path information (70), the original playback path information (50) being an original playback path of the digital stream, the user defined playback path information (70) being defined by a user using the original playback path information; and
stream management information (80) containing a time map (82c, 89c, 86c) for managing the digital stream, the stream management information being different from the playback path information, and
wherein the playback path information (50, 70) contains the first entry point (72), and the stream management information (80) where the time map is contained contains the second entry point (80d).

2. A recording method comprising:
receiving, via a receiver unit (1905) of a recording apparatus, a digital stream, which is a multiplex of a video stream and an audio stream;
receiving a first entry point (72) representing a starting point of playback of the digital stream, the first entry point being defined by a user;
automatically producing, during a monitoring of the digital stream, a second entry point (80d) representing a point at which an attribute of the digital stream changes;
generating management information (90); and
recording the generated management information (90) and the digital stream onto a recording medium,
wherein the management information (90) includes:
playback path information (50, 70) representing a playback path of the digital stream, the playback path information containing original playback path information (50) and user defined playback path information (70), the original playback path information (50) being an original playback path of the digital stream, the user defined playback path information (70) being defined by a user using the original playback path information; and
stream management information (80) containing a time map (82c, 89c, 86c) for managing the digital stream, the stream management information being different from the playback path information, and
wherein the playback path information (50, 70) contains the first entry point (72), and the stream management information (80) where the time map is contained contains the second entry point (80d).

3. A non-transitory computer-readable recording medium having data recorded thereon by a recording apparatus, wherein the data comprises:
a digital stream, which is a multiplex of a video stream and an audio stream; and
management information (90),
wherein the management information (90) includes:
playback path information (50, 70) representing a playback path of the digital stream, the playback path information containing original playback path information (50) and user defined playback path information (70), the original playback path information (50) being an original playback path of the digital stream, the user defined playback path information (70) being defined by a user using the original playback path information; and
stream management information (80) containing a time map (82c, 89c, 86c) for managing the digital stream, the stream management information being different from the playback path information,
wherein the playback path information (50, 70) contains a first entry point (72) representing a starting point of a playback of the digital stream, the first entry point being defined by a user, and
wherein the stream management information (80) where the time map is contained contains a second entry point (80d) representing a point at which an attribute of the digital stream changes, the second entry point being automatically produced during a monitoring of the digital stream.

4. A reproducing apparatus comprising:
a reading unit (1911) operable to read a digital stream and management information from a recording medium, the digital stream being a multiplex of a video stream and an audio stream; and
a playback unit (1908) operable to playback the digital stream in accordance with the management information,
wherein the management information (90) includes:
playback path information (50, 70) representing a playback path of the digital stream, the playback path information containing original playback path information (50) and user defined playback path information (70), the original playback path information (50) being an original playback path of the digital stream, the user defined playback path information (70) being defined by a user using the original playback path information; and
stream management information (80) containing a time map (82c, 89c, 86c) for managing the digital stream, the stream management information being different from the playback path information,
wherein the playback path information (50, 70) contains a first entry point (72) representing a starting point of a playback of the digital stream, the first entry point being defined by a user, and
wherein the stream management information (80) where the time map is contained contains a second entry point (80d) representing a point at which an attribute of the digital stream changes, the second entry point being automatically produced by a recording apparatus during a monitoring of the digital stream by the recording apparatus.

5. A reproducing method comprising:
reading, via a reading unit (1911) of a reproducing apparatus, a digital stream and management information from a recording medium, the digital stream being a multiplex of a video stream and an audio stream; and
playing back the digital stream in accordance with the management information,
wherein the management information (90) includes:
playback path information (50, 70) representing a playback path of the digital stream, the playback path information containing original playback path information (50) and user defined playback path information(70), the original playback path information (50) being an original playback path of the digital stream, the user defined playback path information (70) being defined by a user using the original playback path information; and
stream management information (80) containing a time map (82c, 89c, 86c) for managing the digital stream, the stream management information being different from the playback path information,
wherein the playback path information (50, 70) contains a first entry point (72) representing a starting point of a playback of the digital stream, the first entry point being defined by a user, and
wherein the stream management information (80) where the time map is contained contains a second entry point (80d) representing a point at which an attribute of the digital stream changes, the second entry point being automatically produced by a recording apparatus during a monitoring of the digital stream by the recording apparatus.

## Patentansprüche

1. Aufzeichnungsvorrichtung, mit:
einer Empfangseinheit (1905), die ausgestaltet ist, einen digitalen Strom zu empfangen, der ein Multiplex eines Video-Stroms und eines Audio-Stroms ist,
einer Eingabeeinheit (1901), die ausgestaltet ist, einen ersten Einsprungpunkt (72) zu empfangen, der für einen Startpunkt einer Wiedergabe des digitalen Stroms steht, wobei der erste Einsprungpunkt von einem Benutzer definiert ist,
einem Analysierer (1906), der ausgestaltet ist, während einer Überwachung des digitalen Stroms automatisch einen zweiten Einsprungpunkt (80d) zu erzeugen, der für einen Punkt steht, an dem sich ein Attribut des digitalen Stroms ändert,
einer Steuereinheit (1902), die ausgestaltet ist, Verwaltungsinformation zu erzeugen, und
einer Laufwerkseinheit (1911), die ausgestaltet ist, die erzeugte Verwaltungsinformation und den digitalen Strom auf ein Aufzeichnungsmedium aufzuzeichnen,
wobei die Verwaltungsinformation (90) umfasst:
Wiedergabepfadinformation (50, 70), die für einen Wiedergabepfad des digitalen Stroms steht, wobei die Wiedergabepfadinformation originale Wiedergabepfadinformation (50) und benutzer-definierte Wiedergabepfadinformation (70) umfasst, wobei die originale Wiedergabepfadinformation (50) ein originaler Wiedergabepfad des digitalen Stroms ist, wobei die benutzer-definierte Wiedergabepfadinformation (70) von einem Benutzer unter Verwendung der originalen Wiedergabepfadinformation definiert ist, und
Strom-Verwaltungsinformation (80) mit einer Zeit-Karte (82c, 89c, 86c) zum Verwalten des digitalen Stroms, wobei sich die Strom-Verwaltungsinformation von der Wiedergabepfadinformation unterscheidet, und
wobei die Wiedergabepfadinformation (50, 70) den ersten Einsprungpunkt (72) aufweist und die Strom-Verwaltungsinformation (80), wo die Zeit-Karte enthalten ist, den zweiten Einsprungpunkt (80d) enthält.

2. Aufzeichnungsverfahren, mit:
Empfangen eines digitalen Stroms, der ein Multiplex eines Video-Stroms und eines Audio-Stroms ist, mittels einer Empfangseinheit (1905) einer Aufzeichnungsvorrichtung,
Empfangen eines ersten Einsprungpunkts (72), der für einen Startpunkt einer Wiedergabe des digitalen Stroms steht, wobei der erste Einsprungpunkt von einem Benutzer definiert ist,
automatisches Erzeugen eines zweiten Einsprungpunkts (80d) während einer Überwachung des digitalen Stroms, der für einen Punkt steht, an dem sich ein Attribut des digitalen Stroms ändert,
Erzeugen von Verwaltungsinformation, und
Aufzeichnen der erzeugten Verwaltungsinformation und des digitalen Stroms auf ein Aufzeichnungsmedium,
wobei die Verwaltungsinformation (90) umfasst:
Wiedergabepfadinformation (50, 70), die für einen Wiedergabepfad des digitalen Stroms steht, wobei die Wiedergabepfadinformation originale Wiedergabepfadinformation (50) und benutzer-definierte Wiedergabepfadinformation (70) umfasst, wobei die originale Wiedergabepfadinformation (50) ein originaler Wiedergabepfad des digitalen Stroms ist, wobei die benutzer-definierte Wiedergabepfadinformation (70) von einem Benutzer unter Verwendung der originalen Wiedergabepfadinformation definiert ist, und
Strom-Verwaltungsinformation (80) mit einer Zeit-Karte (82c, 89c, 86c) zum Verwalten des digitalen Stroms, wobei sich die Strom-Verwaltungsinformation von der Wiedergabepfadinformation unterscheidet, und
wobei die Wiedergabepfadinformation (50, 70) den ersten Einsprungpunkt (72) aufweist und die Strom-Verwaltungsinformation (80), wo die Zeit-Karte enthalten ist, den zweiten Einsprungpunkt (80d) enthält.

3. Nicht-flüchtiges computer-lesbares Aufzeichnungsmedium mit darauf von einer Aufzeichnungsvorrichtung aufgezeichneten Daten, wobei die Daten umfassen:
einen digitalen Strom, der ein Multiplex eines Video-Stroms und eines Audio-Stroms ist, und
Verwaltungsinformation (90),
wobei die Verwaltungsinformation (90) umfasst:
Wiedergabepfadinformation (50, 70), die für einen Wiedergabepfad des digitalen Stroms steht, wobei die Wiedergabepfadinformation originale Wiedergabepfadinformation (50) und benutzer-definierte Wiedergabepfadinformation (70) umfasst, wobei die originale Wiedergabepfadinformation (50) ein originaler Wiedergabepfad des digitalen Stroms ist, wobei die benutzer-definierte Wiedergabepfadinformation (70) von einem Benutzer unter Verwendung der originalen Wiedergabepfadinformation definiert ist, und
Strom-Verwaltungsinformation (80) mit einer Zeit-Karte (82c, 89c, 86c) zum Verwalten des digitalen Stroms, wobei sich die Strom-Verwaltungsinformation von der Wiedergabepfadinformation unterscheidet,
wobei die Wiedergabepfadinformation (50, 70) einen ersten Einsprungpunkt (72), der für einen Startpunkt einer Wiedergabe des digitalen Stroms steht, wobei der erste Einsprungpunkt von einem Benutzer definiert ist, aufweist und
wobei die Strom-Verwaltungsinformation (80), wo die Zeit-Karte enthalten ist, einen zweiten Einsprungpunkt (80d) enthält, der für einen Punkt steht, an dem sich ein Attribut des digitalen Stroms ändert, wobei der zweite Einsprungpunkt während einer Überwachung des digitalen Stroms automatisch erzeugt wird.

4. Wiedergabevorrichtung, mit:
einer Leseeinheit (1911), die ausgestaltet ist, einen digitalen Strom und Verwaltungsinformation von einem Aufzeichnungsmedium zu lesen, wobei der digitale Strom ein Multiplex eines Video-Stroms und eines Audio-Stroms ist, und
einer Abspieleinheit (1908), die ausgestaltet ist, den digitalen Strom entsprechend der Verwaltungsinformation abzuspielen,
wobei die Verwaltungsinformation (90) umfasst:
Wiedergabepfadinformation (50, 70), die für einen Wiedergabepfad des digitalen Stroms steht, wobei die Wiedergabepfadinformation originale Wiedergabepfadinformation (50) und benutzer-definierte Wiedergabepfadinformation (70) umfasst, wobei die originale Wiedergabepfadinformation (50) ein originaler Wiedergabepfad des digitalen Stroms ist, wobei die benutzer-definierte Wiedergabepfadinformation (70) von einem Benutzer unter Verwendung der originalen Wiedergabepfadinformation definiert ist, und
Strom-Verwaltungsinformation (80) mit einer Zeit-Karte (82c, 89c, 86c) zum Verwalten des digitalen Stroms, wobei sich die Strom-Verwaltungsinformation von der Wiedergabepfadinformation unterscheidet,
wobei die Wiedergabepfadinformation (50, 70) einen ersten Einsprungpunkt (72), der für einen Startpunkt einer Wiedergabe des digitalen Stroms steht, wobei der erste Einsprungpunkt von einem Benutzer definiert ist, aufweist und
wobei die Strom-Verwaltungsinformation (80), wo die Zeit-Karte enthalten ist, einen zweiten Einsprungpunkt (80d) enthält, der für einen Punkt steht, an dem sich ein Attribut des digitalen Stroms ändert, wobei der zweite Einsprungpunkt von einer Aufzeichnungsvorrichtung während einer Überwachung des digitalen Stroms durch die Aufzeichnungsvorrichtung automatisch erzeugt wird.

5. Wiedergabeverfahren, mit:
Lesen, mittels einer Leseeinheit (1911) einer Wiedergabevorrichtung, eines digitalen Stroms und von Verwaltungsinformation von einem Aufzeichnungsmedium, wobei der digitale Strom ein Multiplex eines Video-Stroms und eines Audio-Stroms ist, und
Abspielen des digitalen Stroms entsprechend der Verwaltungsinformation,
wobei die Verwaltungsinformation (90) umfasst:
Wiedergabepfadinformation (50, 70), die für einen Wiedergabepfad des digitalen Stroms steht, wobei die Wiedergabepfadinformation originale Wiedergabepfadinformation (50) und benutzer-definierte Wiedergabepfadinformation (70) umfasst, wobei die originale Wiedergabepfadinformation (50) ein originaler Wiedergabepfad des digitalen Stroms ist, wobei die benutzer-definierte Wiedergabepfadinformation (70) von einem Benutzer unter Verwendung der originalen Wiedergabepfadinformation definiert ist, und
Strom-Verwaltungsinformation (80) mit einer Zeit-Karte (82c, 89c, 86c) zum Verwalten des digitalen Stroms, wobei sich die Strom-Verwaltungsinformation von der Wiedergabepfadinformation unterscheidet,
wobei die Wiedergabepfadinformation (50, 70) einen ersten Einsprungpunkt (72), der für einen Startpunkt einer Wiedergabe des digitalen Stroms steht, wobei der erste Einsprungpunkt von einem Benutzer definiert ist, aufweist und
wobei die Strom-Verwaltungsinformation (80), wo die Zeit-Karte enthalten ist, einen zweiten Einsprungpunkt (80d) enthält, der für einen Punkt steht, an dem sich ein Attribut des digitalen Stroms ändert, wobei der zweite Einsprungpunkt von einer Aufzeichnungsvorrichtung während einer Überwachung des digitalen Stroms durch die Aufzeichnungsvorrichtung automatisch erzeugt wird.

## Revendications

1. Appareil d'enregistrement comprenant :
une unité réceptrice (1905) pouvant fonctionner pour recevoir un flux numérique, qui est un multiplexage d'un flux vidéo et d'un flux audio ;
une unité d'entrée (1901) pouvant fonctionner pour recevoir un premier point d'entrée (72) représentant un point de départ de reproduction du flux numérique, le premier point d'entrée étant défini par un utilisateur ;
un analyseur (1906) pouvant fonctionner pour produire automatiquement, pendant une surveillance du flux numérique, un deuxième point d'entrée (80d) représentant un point auquel un attribut du flux numérique change ;
une unité de commande (1902) pouvant fonctionner pour générer des informations de gestion ; et
une unité de pilotage (1911) pouvant fonctionner pour enregistrer les informations de gestion générées et le flux numérique sur un support d'enregistrement ;
où les informations de gestion (90) comportent :
des informations (50, 70) de chemin de reproduction représentant un chemin de reproduction du flux numérique, les informations de chemin de reproduction contenant des informations (50) de chemin de reproduction d'origine et des informations (70) de chemin de reproduction définies par un utilisateur, les informations (50) de chemin de reproduction d'origine représentant un chemin de reproduction d'origine du flux numérique, les informations (70) de chemin de reproduction étant définies par un utilisateur en utilisant les informations de chemin de reproduction d'origine ; et
des informations (80) de gestion de flux contenant une carte des temps (82c, 89c, 86c) pour gérer le flux numérique, les informations de gestion de flux étant différentes des informations de chemin de reproduction, et
où les informations (50, 70) de chemin de reproduction contiennent le premier point d'entrée (72), et les informations (80) de gestion de flux où se trouve la carte des temps contiennent le deuxième point d'entrée (80d).

2. Procédé d'enregistrement, comprenant le fait :
de recevoir, via une unité réceptrice (1905) d'un appareil d'enregistrement, un flux numérique, qui est un multiplexage d'un flux vidéo et d'un flux audio ;
de recevoir un premier point d'entrée (72) représentant un point de départ de reproduction du flux numérique, le premier point d'entrée étant défini par un utilisateur ;
de produire automatiquement, durant une surveillance du flux numérique, un deuxième point d'entrée (80d) représentant un point auquel un attribut du flux numérique change ;
de générer des informations de gestion (90) ; et
d'enregistrer les informations (90) de gestion générées et le flux numérique sur un support d'enregistrement,
où les informations (90) de gestion comportent :
des informations (50, 70) de chemin de reproduction représentant un chemin de reproduction du flux numérique, les informations de chemin de reproduction contenant des informations (50) de chemin de reproduction d'origine et des informations (70) de chemin de reproduction définies par un utilisateur, les informations (50) de chemin de reproduction d'origine étant un chemin de reproduction d'origine du flux numérique, les informations (70) de chemin de reproduction étant définies par un utilisateur en utilisant les informations de chemin de reproduction d'origine ; et
des informations (80) de gestion de flux contenant une carte des temps (82c, 89c, 86c) pour gérer le flux numérique, les informations de gestion de flux étant différentes des informations de chemin de reproduction, et
où les informations (50, 70) de chemin de reproduction contiennent le premier point d'entrée (72), et les informations (80) de gestion de flux où se trouve la carte des temps contiennent le deuxième point d'entrée (80d).

3. Support d'enregistrement non-transitoire lisible par un ordinateur sur lequel des données sont enregistrées par un appareil d'enregistrement, où les données comprennent :
un flux numérique, qui est un multiplexage d'un flux vidéo et d'un flux audio ; et
des informations de gestion (90),
où les informations de gestion (90) comportent :
des informations (50, 70) de chemin de reproduction représentant un chemin de reproduction du flux numérique, les informations de chemin de reproduction contenant des informations (50) de chemin de reproduction d'origine et des informations (70) de chemin de reproduction définies par un utilisateur, les informations (50) de chemin de reproduction d'origine représentant un chemin de reproduction d'origine du flux numérique, les informations (70) de chemin de reproduction étant définies par un utilisateur en utilisant les informations de chemin de reproduction d'origine ; et
des informations (80) de gestion de flux contenant une carte des temps (82c, 89c, 86c) pour gérer le flux numérique, les informations de gestion de flux étant différentes des informations de chemin de reproduction,
où les informations (50, 70) de chemin de reproduction contiennent un premier point d'entrée (72) représentant un point de départ d'une reproduction du flux numérique, le point d'entrée étant défini par un utilisateur, et
où les informations (80) de gestion de flux où se trouve la carte des temps contiennent un deuxième point d'entrée (80d) représentant un point auquel un attribut du flux numérique change, le deuxième point d'entrée étant automatiquement produit pendant une surveillance du flux numérique.

4. Appareil de reproduction comprenant :
une unité de lecture (1911) pouvant fonctionner pour lire un flux numérique et des informations de gestion à partir d'un support d'enregistrement, le flux numérique étant un multiplexage d'un flux vidéo et d'un flux audio ; et
une unité de reproduction (1908) pouvant fonctionner pour reproduire le flux numérique en conformité avec les informations de gestion,
où les informations de gestion (90) comportent :
des informations (50, 70) de chemin de reproduction représentant un chemin de reproduction du flux numérique, les informations de chemin de reproduction contenant des informations (50) de chemin de reproduction d'origine et des informations (70) de chemin de reproduction définies par un utilisateur, les informations (50) de chemin de reproduction d'origine représentant un chemin de reproduction d'origine du flux numérique, les informations (70) de chemin de reproduction étant définies par un utilisateur en utilisant les informations de chemin de reproduction d'origine ; et
des informations (80) de gestion de flux contenant une carte des temps (82c, 89c, 86c) pour gérer le flux numérique, les informations de gestion de flux étant différentes des informations de chemin de reproduction,
où les informations (50, 70) de chemin de reproduction contiennent un premier point d'entrée (72) représentant un point de départ d'une reproduction du flux numérique, le premier point d'entrée étant défini par un utilisateur, et
où les informations (80) de gestion de flux où se trouve la carte des temps contiennent un deuxième point d'entrée (80d) représentant un point auquel un attribut du flux numérique change, le deuxième point d'entrée étant automatiquement produit par un appareil d'enregistrement pendant une surveillance du flux numérique par l'appareil d'enregistrement.

5. Procédé de reproduction comprenant le fait :
de lire, via une unité de lecture (1911) d'un appareil de reproduction, un flux numérique et des informations de gestion à partir d'un support d'enregistrement, le flux numérique étant un multiplexage d'un flux vidéo et d'un flux audio ; et
de reproduire le flux numérique en conformité avec les informations de gestion,
où les information de gestion (90) comportent :
des informations (50, 70) de chemin de reproduction représentant un chemin de reproduction du flux numérique, les informations de chemin de reproduction contenant des informations (50) de chemin de reproduction d'origine et des informations (70) de chemin de reproduction définies par un utilisateur, les informations (50) de chemin de reproduction d'origine représentant un chemin de reproduction d'origine du flux numérique, les informations (70) de chemin de reproduction étant définies par un utilisateur en utilisant les informations de chemin de reproduction d'origine ; et
des informations (80) de gestion de flux contenant une carte des temps (82c, 89c, 86c) pour gérer le flux numérique, les informations de gestion de flux étant différentes des informations de chemin de reproduction,
où les informations (50, 70) de chemin de reproduction contiennent un premier point d'entrée (72) représentant un point de départ d'une reproduction du flux numérique, le premier point d'entrée étant défini par un utilisateur, et
où les informations (80) de gestion de flux où se trouve la carte des temps contiennent un deuxième point d'entrée (80d) représentant un point auquel un attribut du flux numérique change, le deuxième point d'entrée étant automatiquement produit par un appareil d'enregistrement pendant une surveillance du flux numérique par l'appareil d'enregistrement.
